(19) Europäisches Patentamt
European Patent Office
Office européen des brevets

(11) **EP 4 152 211 A1**

(12) **EUROPEAN PATENT APPLICATION**
published in accordance with Art. 153(4) EPC

(43) Date of publication:
**22.03.2023 Bulletin 2023/12**

(21) Application number: **21825658.4**

(22) Date of filing: **12.04.2021**

(51) International Patent Classification (IPC):
**G06N 3/04** (2006.01)

(52) Cooperative Patent Classification (CPC):
**G06F 18/00; G06F 40/58; G06N 3/04; G06N 3/08**

(86) International application number:
**PCT/CN2021/086589**

(87) International publication number:
**WO 2021/253941 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2020 CN 202010558711**

(71) Applicant: **Huawei Technologies Co., Ltd.**
**Longgang District,**
**Shenzhen,**
**Guangdong 518129 (CN)**

(72) Inventors:
• **HU, Dingsheng**
  **Shenzhen, Guangdong 518129 (CN)**
• **XU, Bin**
  **Shenzhen, Guangdong 518129 (CN)**
• **YAO, Qizhong**
  **Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **NEURAL NETWORK MODEL TRAINING METHOD, IMAGE CLASSIFICATION METHOD, TEXT TRANSLATION METHOD AND APPARATUS, AND DEVICE**

(57) This application relates to the field of artificial intelligence technologies, and discloses a neural network model training method, apparatus, and device, an image classification method, apparatus, and device, and a text translation method, apparatus, and device. The neural network model training method includes: obtaining a codeword corresponding to a first weight matrix of a neural network model from a memory; determining, based on the codeword, that a weight matrix of the neural network model is the first weight matrix, and training the first weight matrix by using training data; updating the codeword when a preset stop condition is not met, to obtain an updated codeword; storing the updated codeword in the memory; determining, by using the updated codeword obtained from the memory, that the weight matrix of the neural network model is a second weight matrix, and training the second weight matrix by using training data; and stopping training of the neural network model when the preset stop condition is met. Memory space occupied by the codeword is far less than that occupied by the weight matrix, and therefore a data amount read from the memory can be reduced.

FIG. 3

- Obtain a codeword from a memory, where the codeword corresponds to a first weight matrix of a neural network model — 301
- Determine, based on the codeword, that a weight matrix of the neural network model is the first weight matrix, and train the first weight matrix by using training data — 302
- Update the codeword when a preset stop condition is not met, to obtain an updated codeword — 303
- Store the updated codeword in the memory — 304
- Determine, by using the updated codeword obtained from the memory, that the weight matrix of the neural network model is a second weight matrix, and train the second weight matrix by using training data — 305
- Stop training of the neural network model when the preset stop condition is met — 306

**Description**

This application claims priority to Chinese Patent Application No. 202010558711.6, filed with the Chinese Patent Office on June 18, 2020 and entitled "NEURAL NETWORK MODEL TRAINING METHOD, APPARATUS, AND DEVICE, IMAGE CLASSIFICATION METHOD, APPARATUS, AND DEVICE, AND TEXT TRANSLATION METHOD, APPARATUS, AND DEVICE", which is incorporated herein by reference in its entirety.

**TECHNICAL FIELD**

This application relates to the field of artificial intelligence technologies, and in particular, to a neural network model training method, apparatus, and device, an image classification method, apparatus, and device, and a text translation method, apparatus, and device.

**BACKGROUND**

With rapid development of artificial intelligence (artificial intelligence, AI), a neural network (neural network, NN) has made breakthrough progress as a key technology that leads a current development direction of AI. The neural network has achieved relatively high accuracy in many fields such as image processing, text classification, machine translation, and natural language processing.

Currently, when a preset task (for example, image classification or text translation) is executed by using a neural network model, the neural network model usually needs to be trained in advance, to improve accuracy of a task result output by the model. Usually, the neural network may include a plurality of weight coefficient matrices. When an operation is performed for the preset task by using the neural network, for example, when a classification task is used as an example, a data vector of a to-be-classified object may be input to the neural network, so that the neural network performs calculation based on the data vector and vectors of the plurality of weight coefficient matrices in the neural network, to obtain an output vector corresponding to the data vector, and then the neural network may classify the to-be-classified object based on the output vector. Usually, the weight coefficient matrix in the neural network in an initial state is unknown. To obtain a more accurate weight coefficient matrix to enable the neural network to obtain a more accurate operation result, the neural network in the initial state needs to be trained, and in a training process, a weight coefficient matrix included at each layer of the neural network is continuously updated and corrected based on a difference between an output result of the neural network and an ideal output result, until the neural network can obtain an output vector close to an ideal output vector after processing any data vector based on a corrected weight coefficient matrix.

However, during training of the neural network model, to ensure accuracy of a result output by the neural network model, a weight coefficient included at each layer needs to be repeatedly and continuously updated and corrected by using training data. A current neural network usually includes a plurality of layers (more than 15 layers) of networks, and a data amount of a weight coefficient matrix included at each layer is relatively large. Therefore, in a training process, data of the weight coefficient matrix is repeatedly read, and consequently a memory bottleneck is caused, and even it is difficult to train the neural network in a resource-limited scenario.

**SUMMARY**

Embodiments of this application provide a neural network model training method, apparatus, and device, an image classification method, apparatus, and device, and a text translation method, apparatus, and device, to reduce a data amount of a weight matrix existing in a process of training a neural network model and a calculation amount of an intermediate parameter existing in a process of updating the weight matrix, so that when a preset task (for example, image classification or text translation) is executed by using the neural network model, a memory bottleneck problem can be resolved, and an expected effect can be achieved.

According to a first aspect, this application provides a neural network model training method. The method includes: obtaining a codeword corresponding to a first weight matrix of a neural network model from a memory; determining, based on the codeword, that a weight matrix of the neural network model is the first weight matrix, and training the first weight matrix by using training data; updating the codeword when a preset stop condition is not met, to obtain an updated codeword; storing the updated codeword in the memory; determining, by using the updated codeword obtained from the memory, that the weight matrix of the neural network model is a second weight matrix, and training the second weight matrix by using training data; and stopping training of the neural network model when the preset stop condition is met.

In comparison with a conventional technology, in this embodiment of this application, when the neural network model is trained, the weight matrix is no longer directly read from the memory, but the codeword corresponding to the weight matrix is read, to form a weight matrix for training. Memory space occupied by the codeword is far less than memory space occupied by the weight matrix, and therefore a data amount read from the memory can be greatly reduced, and a memory bottleneck problem can be overcome. In addition, in this application, in a model training process, an update amount of the weight matrix is no longer calculated, but an update amount of the codeword is calculated, to determine a new weight matrix for subsequent training. Therefore, a calculation amount of an intermediate parameter existing in an updating process can be reduced, so that the neural network model can be smoothly trained in a resource-limited scenario.

In a possible implementation, when the first weight matrix is an initial weight matrix, the method further includes: dividing the initial weight matrix, to determine a codeword corresponding to the initial weight matrix. This helps subsequently store the codeword in the memory, to reduce memory usage.

In a possible implementation, the dividing the initial weight matrix, to determine a codeword corresponding to the initial weight matrix includes:

dividing the initial weight matrix into k submatrices of a same dimension, where k is a positive integer greater than 1;
performing clustering processing on the k submatrices of a same dimension, to obtain n codewords corresponding to the k submatrices of a same dimension, where n is a positive integer greater than 0, and $n \leq k$; and
determining the n codewords as the codeword corresponding to the initial weight matrix.

In this way, when the neural network model is trained, the codeword corresponding to the initial weight matrix of the neural network model may be obtained from the memory to perform model training, and the initial weight matrix does not need to be directly read for training. Data storage space occupied by the codeword is far less than data storage space occupied by the weight matrix, and therefore a data amount read from the memory can be greatly reduced, and a memory bottleneck problem can be effectively overcome.

In a possible implementation, the performing clustering processing on the k submatrices of a same dimension, to obtain n codewords corresponding to the k submatrices of a same dimension includes:

reducing each of the k submatrices of a same dimension into a one-dimensional vector, to obtain k one-dimensional vectors;
grouping the k one-dimensional vectors into n vector groups, where each vector group includes at least one one-dimensional vector; and
performing average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In this way, the n codewords can be obtained by performing clustering and averaging, and each codeword can simultaneously represent a plurality of submatrices. Therefore, the weight matrix of the neural network can be quickly obtained through decoding by using the n codewords.

In another possible implementation, the method further includes:
releasing the weight matrix of the neural network model in the memory when the preset stop condition is not met. In this way, memory space can be further saved, to help overcome the memory bottleneck problem.

In a possible implementation, the updating the codeword when a preset stop condition is not met, to obtain an updated codeword includes:

determining a weight gradient of the first weight matrix of the neural network model when the preset stop condition is not met; and
determining a codeword gradient based on the first weight gradient, and determining the updated codeword based on the codeword gradient.

In this way, the codeword gradient may be determined based on the weight gradient, to obtain a more accurate updated codeword for subsequent model training.

In a possible implementation, the determining a codeword gradient based on the weight gradient, and determining the updated codeword based on the codeword gradient includes:

performing weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;
optimizing the codeword gradient corresponding to the $j^{th}$ codeword, to obtain an update amount of the $j^{th}$ codeword; and
updating the $j^{th}$ codeword by using the update amount of the $j^{th}$ codeword, to obtain an updated $j^{th}$ codeword.

In this way, each codeword can be accurately determined, to obtain a new weight matrix through decoding to perform subsequent model training.

In another possible implementation, the method further includes:
obtaining an index, where the index is a correspondence between the codeword and the weight matrix of the neural network model. This can help more accurately obtain the weight matrix of the neural network model through decoding by using the codeword and the index.

In a possible implementation, the preset stop condition includes one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

According to a second aspect, this application further provides an image classification method. The method includes: obtaining a to-be-classified image; and inputting the to-be-classified image to a trained neural network model, to obtain an image classification result output by the neural network model. A process of training the neural network model includes: obtaining a codeword corresponding to a first weight matrix of the neural network model from a memory; determining, based on the codeword, that a weight matrix of the neural network model is the first weight matrix, and training the first weight matrix by using training data, where the training data includes a positive sample image and a negative sample image; after the neural network model outputs a probability value indicating that the training data is a positive sample image, updating the codeword when a preset stop condition is not met, to obtain an updated codeword; storing the updated codeword in the memory; determining, by using the updated codeword obtained from the memory, that the weight matrix of the neural network model is a second weight matrix, and training the second weight matrix by using training data; and stopping training of the neural network model when the preset stop condition is met.

In comparison with a conventional technology, in this embodiment of this application, the to-be-classified image is classified by using the pre-trained neural network model. The neural network model can achieve global optimality, and therefore the classification result output by the neural network model is more accurate, to improve accuracy of the classification result.

According to a third aspect, this application further provides a text translation method. The method includes: obtaining to-be-translated text; and inputting the to-be-translated text to a trained neural network model, to obtain a text translation result output by the neural network model. A process of training the neural network model includes: obtaining a codeword corresponding to a first weight matrix of the neural network model from a memory; determining, based on the codeword, that a weight matrix of the neural network model is the first weight matrix, and training the first weight matrix by using training data, where the training data is sample text; after the neural network model outputs a translation result of the sample text, updating the codeword when a preset stop condition is not met, to obtain an updated codeword; storing the updated codeword in the memory; determining, by using the updated codeword obtained from the memory, that the weight matrix of the neural network model is a second weight matrix, and training the second weight matrix of the neural network model by using training data; and stopping training of the neural network model when the preset stop condition is met.

In comparison with a conventional technology, in this embodiment of this application, the to-be-translated text is translated by using the pre-trained neural network model. The neural network model can achieve global optimality, and therefore the translation result output by the neural network model is more accurate, to improve accuracy of the translation result.

According to a fourth aspect, this application further provides a neural network model training apparatus. The apparatus includes: a first obtaining unit, configured to obtain a codeword from a memory, where the codeword corresponds to a first weight matrix of a neural network model; a first training unit, configured to: determine, based on the codeword, that a weight matrix of the neural network model is the first weight matrix, and train the first weight matrix by using training data; an updating unit, configured to update the codeword when a preset stop condition is not met, to obtain an updated codeword; a storage unit, configured to store the updated codeword in the memory; a second training unit, configured to: determine, by using the updated codeword obtained from the memory, that the weight matrix of the neural network model is a second weight matrix, and train the second weight matrix by using training data; and a stop unit, configured to stop training of the neural network model when the preset stop condition is met.

In a possible implementation, when the first weight matrix is an initial weight matrix, the apparatus further includes:

a division unit, configured to divide the initial weight matrix, to determine a codeword corresponding to the initial weight matrix.

In a possible implementation, the division unit includes:

a first division subunit, configured to divide the initial weight matrix into k submatrices of a same dimension, where k is a positive integer greater than 1;

a clustering subunit, configured to perform clustering processing on the k submatrices of a same dimension, to obtain n codewords corresponding to the k submatrices of a same dimension, where n is a positive integer greater than 0, and $n \leq k$; and

a first determining subunit, configured to determine the n codewords as the codeword corresponding to the initial weight matrix

In a possible implementation, the clustering subunit includes:

a dimension reduction subunit, configured to reduce each of the k submatrixes of a same dimension into a one-dimensional vector, to obtain k one-dimensional vectors;

a second grouping subunit, configured to group the k one-dimensional vectors into n vector groups, where each vector group includes at least one one-dimensional vector; and

a calculation subunit, configured to perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In a possible implementation, the apparatus further includes: a releasing unit, configured to release the weight matrix of the neural network model in the memory when the preset stop condition is not met

In a possible implementation, the updating unit includes:

a second determining subunit, configured to determine a weight gradient of the first weight matrix of the neural network model when the preset stop condition is not met; and

a third determining subunit, configured to: determine a codeword gradient based on the first weight gradient and an index, and determine the updated codeword based on the codeword gradient.

In a possible implementation, the third determining subunit includes:

a first obtaining subunit, configured to perform weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;

a second obtaining subunit, configured to optimize the codeword gradient corresponding to the $j^{th}$ codeword, to obtain an update amount of the $j^{th}$ codeword; and

a third obtaining subunit, configured to update the $j^{th}$ codeword by using the update amount of the $j^{th}$ codeword, to obtain an updated $j^{th}$ codeword.

In a possible implementation, the apparatus further includes:

a second obtaining unit, configured to obtain an index, where the index is a correspondence between the codeword and the weight matrix of the neural network model.

In a possible implementation, the preset stop condition includes one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

According to a fifth aspect, this application further provides an image classification apparatus. The apparatus includes: an image obtaining unit, configured to obtain a to-be-classified image; an image classification unit, configured to input the to-be-classified image to a trained neural network model, to obtain an image classification result output by the neural network model; and a neural network model training unit, configured to train the neural network model.

The neural network model training unit includes:

a first obtaining unit, configured to obtain a codeword from a memory, where the codeword corresponds to a first weight matrix of the neural network model;

a first training unit, configured to determine, based on the codeword, that a weight matrix of the neural network model is the first weight matrix, and train the first weight matrix by using training data, where the training data includes a positive sample image and a negative sample image;

an updating unit, configured to: after the neural network model outputs a probability value indicating that the training data is a positive sample image, update the codeword when a preset stop condition is not met, to obtain an updated codeword;

a storage unit, configured to store the updated codeword in the memory;

a second training unit, configured to: determine, by using the updated codeword obtained from the memory, that the weight matrix of the neural network model is a second weight matrix, and train the second weight matrix by using training data; and

a stop unit, configured to stop training of the neural network model when the preset stop condition is met.

According to a sixth aspect, this application further provides a text translation apparatus. The apparatus includes: a text obtaining unit, configured to obtain to-be-translated text; a text translation unit, configured to input the to-be-translated text to a trained neural network model, to obtain a text translation result output by the neural network model; and a neural network model training unit, configured to train the neural network model.

The neural network model training unit includes:

a first obtaining unit, configured to obtain a codeword from a memory, where the codeword corresponds to a first weight matrix of the neural network model;

a first training unit, configured to determine, based on the codeword, that a weight matrix of the neural network model is the first weight matrix, and train the first weight matrix by using training data, where the training data is sample text;

an updating unit, configured to: after the neural network model outputs a translation result of the sample text, update the codeword when a preset stop condition is not met, to obtain an updated codeword;

a storage unit, configured to store the updated codeword in the memory;

a second training unit, configured to: determine, by using the updated codeword obtained from the memory, that the weight matrix of the neural network model is a second weight matrix, and train the second weight matrix by using training data; and

a stop unit, configured to stop training of the neural network model when the preset stop condition is met.

According to a seventh aspect, this application further provides a neural network model training device. The neural network model training device includes a storage and a processor.

The storage is configured to store instructions. The processor is configured to execute the instructions in the storage, to perform the neural network model training method in any one of the first aspect and the possible implementations of the first aspect.

According to an eighth aspect, this application further provides an image classification device. The image classification device includes a storage and a processor.

The storage is configured to store instructions. The processor is configured to execute the instructions in the storage, to perform the image classification method in the second aspect.

According to a ninth aspect, this application further provides a text translation device. The text translation device includes a storage and a processor.

The storage is configured to store instructions. The processor is configured to execute the instructions in the storage, to perform the text translation method in the third aspect.

According to a tenth aspect, this application further provides a computer-readable storage medium, including instructions. When the instructions are run on a computer, the computer is enabled to perform the neural network model training method in any one of the first aspect and the possible implementations of the first aspect, the image classification method in the second aspect, or the text translation method in the third aspect.

It can be learned from the foregoing technical solutions that the embodiments of this application have the following advantages:

In the embodiments of this application, when the neural network model is trained, the codeword corresponding to the first weight matrix of the neural network model is obtained from the memory; it is determined, based on the codeword, that the weight matrix of the neural network model is the first weight matrix, and the first weight matrix is trained by using the training data; the codeword is updated when the preset stop condition is not met, to obtain the updated codeword; the updated codeword is stored in the memory; it is determined, by using the updated codeword obtained from the memory, that the weight matrix of the neural network model is the scond weight matrix, and the second weight matrix is trained by using the training data; and training of the neural network model is stopped when the preset stop condition is met. It may be learned that in the embodiments of this application, when the neural network model is trained, the weight matrix is no longer directly read from the memory, but the codeword corresponding to the weight matrix is read, to form a weight matrix for training. Memory space occupied by the codeword is far less than memory space occupied by the weight matrix, and therefore a data amount read from the memory can be greatly reduced, and a memory bottleneck problem can be overcome. In addition, in this application, in a model training process, an update amount of the weight matrix is no longer calculated, but an update amount of the codeword is calculated, to determine a new weight matrix for subsequent training. Therefore, a calculation amount of an intermediate parameter existing in an updating process can be reduced, so that the neural network model can be smoothly trained in a resource-limited scenario.

**BRIEF DESCRIPTION OF DRAWINGS**

To describe technical solutions in embodiments of this application more clearly, the following briefly describes accompanying drawings used in describing the embodiments. It is clearly that the accompanying drawings in the following descriptions show merely some embodiments described in this application, and a person of ordinary skill in the art may further derive other accompanying drawings from these accompanying drawings.

FIG. 1 is a schematic diagram of a structure of a principal artificial intelligence framework according to an embodiment of this application;
FIG. 2 is a schematic architectural diagram of a system to which an embodiment of this application is applied;
FIG. 3 is a flowchart of a neural network model processing method according to an embodiment of this application;
FIG. 4 is a schematic diagram of determining a first weight matrix of a neural network model based on a codeword according to an embodiment of this application;
FIG. 5 is a schematic diagram of updating a codeword according to an embodiment of this application;
FIG. 6 is a flowchart of an image segmentation method according to an embodiment of this application;
FIG. 7 is a flowchart of a text translation method according to an embodiment of this application;
FIG. 8 is a schematic structural diagram of a training apparatus for a neural network model according to an embodiment of this application; and
FIG. 9 is a block diagram of a structure of an image classification apparatus according to an embodiment of this application;
FIG. 10 is a block diagram of a structure of a text translation apparatus according to an embodiment of this application;
FIG. 11 is a schematic structural diagram of a training apparatus for a neural network model according to an embodiment of this application; and
FIG. 12 is a schematic structural diagram of an image processing device according to an embodiment of this application;
FIG. 13 is a schematic diagram of a structure of a text translation device according to an embodiment of this application.

**DESCRIPTION OF EMBODIMENTS**

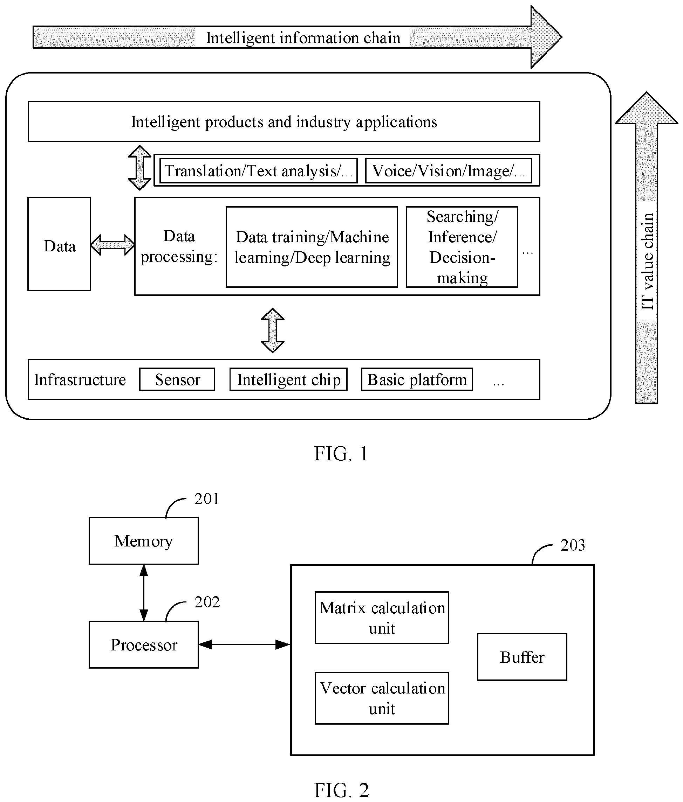

The embodiments of this application provide a neural network model training method, apparatus, and device, an image classification method, apparatus, and device, and a text translation method, apparatus, and device, to reduce a data amount of a weight matrix existing in a process of training a neural network model and a calculation amount of an intermediate parameter existing in a process of updating the weight matrix, so as to resolve a memory bottleneck problem and achieve an expected training effect.
The following describes the embodiments of this application with reference to accompanying drawings. A person of ordinary skill in the art may learn that, with technology development and emergence of a new scenario, the technical solutions provided in the embodiments of this application are also applicable to a similar technical problem.
An overall working procedure of an artificial intelligence system is first described. FIG. 1 is a schematic structural diagram of an artificial intelligence principle-framework. The following describes the foregoing artificial intelligence theme framework from two dimensions: "intelligent information chain" (horizontal axis) and "IT value chain" (vertical axis). The "intelligent information chain" reflects a series of processes from data obtaining to data processing. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides calculation capability support for the artificial intelligence system, communicates with an external world, and implements supporting by using a basic platform. The infrastructure communicates with the outside by using a sensor. A calculation capability is provided by an intelligent chip (a hardware acceleration chip such as a CPU, an NPU, a GPU, an ASIC, or an FPGA). The base platform includes related platform assurance and support such as a distributed calculation framework and a network, and may include cloud storage and calculation, an interconnection and interworking network, and the like. For example, the sensor communicates with the outside to obtain data, and the data is provided to an intelligent chip in a distributed calculation system for calculation, where the distributed calculation system is provided by the base platform.

(2) Data

Data at an upper layer of the infrastructure is used to indicate a data source in the field of artificial intelligence. The data relates to a graph, an image, a voice, and text, further relates to internet of things data of a conventional device, and includes service data of an existing system and perception data such as force, displacement, a liquid level, a temperature, and humidity.

(3) Data processing

The data processing usually includes manners such as data training, machine learning, deep learning, searching, inference, and decision-making.
The machine learning and the deep learning may mean performing symbolic and formalized intelligent information modeling, extraction, preprocessing, training, and the like on data.
The inference is a process in which a human intelligent inference manner is simulated on a computer or in an intelligent system, and machine thinking and problem resolving are performed by using formal information according to an inference control policy. Atypical function is search and match.
The decision-making is a process in which a decision is made after intelligent information inference, and usually provides functions such as classification, ranking, and prediction.

(4) General capabilities

After data processing mentioned above is performed on data, some general capabilities may be further formed based on a data processing result, for example, an algorithm or a general system, such as translation, text analysis, computer vision processing, speech recognition, and image recognition.

(5) Intelligent products and industry applications

The intelligent products and industry applications are products and applications of the artificial intelligence system in various fields, encapsulate overall solutions of artificial intelligence, and mean that intelligent information decisions are turned into products and are applied. Fields to which the artificial intelligence system is applied include an intelligent terminal, intelligent transportation, intelligent healthcare, self-driving, a safe city, and the like.
The embodiments of this application relate to process of training a neural network model. Therefore, for ease of understanding, terms and concepts that are related to the neural network model and that may be involved in the embodiments of this application are first described below.

(1) Neural network

The neural network may include neurons. The neuron may be an operation unit that uses xs and an intercept 1 as an input, and an output of the operation unit may be as follows:

$$h_{W,b}(x) = f(W^T x) = f(\sum_{s=1}^{n} W_s x_s + b) \qquad\qquad (1)$$

Herein, s=1, 2, ..., or n, n is a natural number greater than 1, Ws is a weight of Xs, and b is bias of the neuron. f represents an activation function (activation functions) of the neuron, where the activation function is used to introduce a non-linear characteristic into the neural network, to convert an input signal in the neuron into an output signal. The output signal of the activation function may be used as input of a next convolutional layer, and the activation function may be a sigmoid function. The neural network is a network constituted by connecting a plurality of single neurons together. To be specific, output of a neuron may be input of another neuron. Input of each neuron may be connected to a local receptive field of a previous layer to extract a feature of the local receptive field. The local receptive field may be a region including several neurons.

(2) Loss function

In a process of training a deep neural network, because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(3) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until an error loss occurs in output, and the parameters in the initial neural network model are updated based on back propagation error loss information, so that the error loss is reduced. The back propagation algorithm is a back propagation motion mainly dependent on the error loss, and aims to obtain parameters of an optimal neural network model, for example, a weight matrix.

This application may be applied to the field of artificial intelligence. A system structure applied to training of a neural network model in the embodiments of this application is described below.

FIG. 2 is an example diagram of a system architecture applied to an embodiment of this application. As shown in FIG. 2, in this scenario, a memory 201, a processor 202, and an AI hardware accelerator 203 are included. The memory 201 is connected to the processor 202, and the processor 202 is connected to the AI hardware accelerator 203. The "connection" may be a direct connection, or may be an indirect connection.

The memory 201 is one of important components in a computer, and is a bridge for communication between an external storage and the processor 202. All programs in the computer are executed in memory.

The processor 202 may be a central processing unit (central processing unit, CPU), and is configured to allocate an acceleration task and the like to the AI hardware accelerator 203 connected to the processor 202.

The AI hardware accelerator 203 may be an independent chip, or may be integrated into a system on chip (system on chip, SoC) as a functional module. The AI hardware accelerator 203 mainly includes a matrix calculation unit (cube unit), a vector calculation unit (vector unit), and a buffer (buffer).

The matrix calculation unit is configured to complete matrix multiplication calculation, for example, complete gradient calculation in a neural network and matrix multiplication calculation corresponding to a convolutional layer and a fully connected layer. Specifically, when performing an operation corresponding to the convolutional layer or the fully connected layer, the matrix calculation unit reads data corresponding to a data matrix from a data buffer unit and a parameter buffer unit. Parameter data read from the parameter buffer unit is transferred to the parameter buffer unit by using a storage and a read/write controller. In a transfer process, a decompression operation needs to be first performed on the parameter data by using a decompression engine, and then the parameter data can be used by the matrix calculation unit to perform matrix multiplication calculation, to obtain a partial result or a final result of the matrix. The result is stored in an accumulator.

The vector processing unit may further optimize the output result of the matrix calculation unit based on a requirement in an actual situation, for example, perform operations such as vector multiplication, vector addition, an exponential operation, a logarithmic operation, and size comparison, and is mainly used for network calculation corresponding to a non-convolutional layer and a layer other than the fully connected layer in the neural network, for example, an activation function (rectified linear unit, Relu) layer and a pooling (Pooling) layer.

The buffer is configured to store data loaded from the memory to the AI hardware accelerator, intermediate data generated in a calculation process, and the like.

A neural network model training process applied to the AI hardware accelerator 203 in this application is as follows:

In this embodiment of this application, the AI hardware accelerator 203 obtains, from the memory 201 by using the processor 202, a codeword and an index corresponding to an initial weight matrix of a neural network model; determines a weight matrix of the neural network model based on the obtained codeword and the obtained index, and trains the weight matrix by using training data; updates the codword when a preset stop condition is not met, and determines a new weight matrix by using an updated codeword and the previously obtained index, to perform model training again; and so on. The codeword is repeatedly updated provided that the preset stop condition is not met, and a new weight matrix is determined by using an updated codeword, to perform model training again, until the preset stop condition is met. In this way, a data amount of the weight matrix existing in a process of training the neural network model and a calculation amount of an intermediate parameter existing in a process of updating the weight matrix are reduced. Therefore, a memory bottleneck problem is resolved, and an expected model training effect can be achieved.

It should be noted that the foregoing application scenario is shown merely for facilitating understanding of a principle of the present invention, and an implementation of the present invention is not limited in this aspect. On the contrary, the implementations of this application may be applied to any applicable scenario.

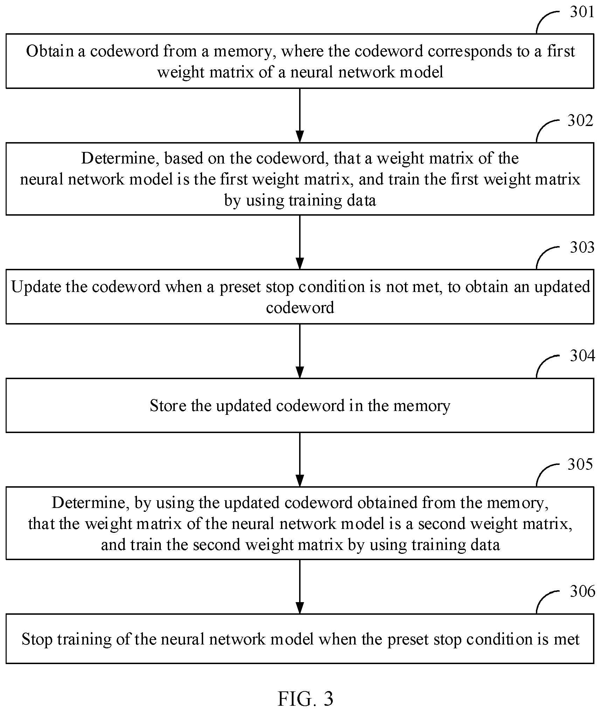

Based on the foregoing application scenario, an embodiment of this application provides a neural network model training method. The method may be applied to the AI hardware accelerator 203. As shown in FIG. 3, the method includes the following steps.

S301: Obtain a codeword from a memory, where the codeword corresponds to a first weight matrix of a neural network model.

In this embodiment, to overcome a memory bottleneck problem in a process of training the neural network model, a weight matrix is no longer repeatedly loaded, but the codeword is obtained from the memory, to perform model training. The codewords correspond to the first weight matrix of the neural network model. In addition, when the first weight matrix is an initial weight matrix, the initial weight matrix needs to be divided, to determine a codeword corresponding to the initial weight matrix. That is, the initial weight matrix of the neural network model needs to be preprocessed, to divide the initial weight matrix into the corresponding codeword and a corresponding index. The codeword refers to a representation of each occurrence state in a dictionary. However, each codeword in this application refers to a submatrix in a weight matrix. Memory space occupied by the codeword is far less than memory space occupied by the weight matrix. For detailed content of the codeword, refer to related description in subsequent step A2. The index represents a correspondence between the codeword and the weight matrix of the neural network model, and weight averages included at all layers of the neural network model respectively correspond to different codewords and indices. In this way, when the neural network model is trained, the codeword corresponding to the initial weight matrix of the neural network model may be obtained from the memory, to perform subsequent steps S302 to S306 to complete model training, and the initial weight matrix does not need to be directly read for training. Data storage space occupied by the codeword is far less than data storage space occupied by the weight matrix, and therefore a data amount read from the memory can be greatly reduced, and a memory bottleneck problem can be effectively overcome.

In a possible implementation of this embodiment, a specific implementation process of preprocessing the initial weight matrix of the neural network model, to divide the initial weight matrix into the corresponding codeword and the corresponding index may include the following steps A1 to A3:

Step A1: Divide the initial weight matrix into k submatrices of a same dimension, and determine index numbers corresponding to the k submatrices of a same dimension, where k is a positive integer greater than 1.

In this implementation, preprocessing the initial weight matrix of the neural network model means preprocessing initial weight matrices included at all the layers of the neural network model, so that the initial weights included at all the layers respectively correspond to different codewords and indices. It should be noted that in subsequent content, in this embodiment, an initial weight matrix included at a specific layer of the neural network model is used as an example to describe how to preprocess the initial weight matrix, to obtain a codeword and an index corresponding to the initial weight matrix, and perform subsequent processing on the initial weight matrix. Manners of processing initial weight matrices included at other layers are similar to this, and are not described one by one

Specifically, in this application, the initial weight is first divided into the k submatrices of a same dimension, and an index number corresponding to each submatrix is determined. The submatrix and the index number are in a one-to-one correspondence (in other words, one submatrix corresponds to one index number). For example, the index numbers corresponding to the k submatrices of a same dimension may be respectively defined as $i_0$, $i_1$, ..., and $i_{k-1}$, to perform subsequent step A3. k is a positive integer greater than 1.

Step A2: Perform clustering processing on the k submatrices of a same dimension, to obtain n codewords corresponding to the k submatrices of a same dimension, and determine index values corresponding to the n codewords, where n is a positive integer greater than 0, and $n \leq k$.

In this implementation, after the initial weight matrix is divided into the k submatrices of a same dimension in step A1, clustering processing may be further performed on the k submatrices of a same dimension, to obtain n category centers (namely, the n codewords), where n is a positive integer greater than 0, and $n \leq k$. In this way, a submatrix (namely, a codeword) corresponding to each category center may be used to represent each submatrix in a category to which the submatrix belongs. In addition, the index values respectively corresponding to the n codewords may be further determined. The index value and the codeword are in a one-to-one correspondence (in other words, one codeword corresponds to one index value). For example, the index values corresponding to the n codewords may be respectively defined as 1, 2, ..., and n, to perform step A3.

Specifically, in an optional implementation, a specific implementation process of performing clustering processing on the k submatrices of a same dimension, to obtain the n codewords corresponding to the k submatrices of a same dimension in step A2 may include the following steps A21 to A23:

Step A21: Reduce each of the k submatrices of a same dimension into a one-dimensional vector, to obtain k one-dimensional vectors.

In this implementation, to determine the n codewords corresponding to the k submatrices of a same dimension, each of the k submatrices of a same dimension needs to be reduced into a one-dimensional vector, to obtain the k one-dimensional vectors.

For example, if the k submatrices of a same dimension include a matrix $\begin{bmatrix} a_1 & a_2 & a_3 \\ a_4 & a_5 & a_6 \end{bmatrix}$ with an order of 2*3, the matrix may be reduced into a one-dimensional vector $[a_1, a_2, a_3, a_4, a_5, a_6]$ that includes six elements.

Step A22: Group the k one-dimensional vectors into n vector groups, where each vector group includes at least one one-dimensional vector.

In this implementation, after the k submatrices of a same dimension are respectively reduced into the k corresponding one-dimensional vectors in step A21, the k one-dimensional vectors may be further grouped, for example, vectors that include element values that are relatively close to each other may be grouped into a vector group, so that each vector group includes at least one one-dimensional vector.

Step A23: Perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In this implementation, after the k one-dimensional vectors are grouped into the n vector groups in step A22, a central vector of each vector group may be further determined, to determine a codeword corresponding to the vector group. Specifically, the $i^{th}$ vector group is used as an example (i may be any integer that ranges from 1 to n). If the $i^{th}$ vector group includes three one-dimensional vectors $[a_1, a_2, a_3, a_4, a_5, a_6]$, $[b_1, b_2, b_3, b_4, b_5, b_6]$, and $[c_1, c_2, c_3, c_4, c_5, c_6]$, average calculation may be performed on element values at corresponding locations in the three one-dimensional vectors, to obtain a one-dimensional average vector $\left[ \dfrac{a_1+b_1+c_1}{3}, \dfrac{a_2+b_2+c_2}{3}, \dfrac{a_3+b_3+c_3}{3}, \dfrac{a_4+b_4+c_4}{3}, \dfrac{a_5+b_5+c_5}{3}, \dfrac{a_6+b_6+c_6}{3} \right]$. The one-dimensional vector is the codeword corresponding to the $i^{th}$ vector group, and a length of the codeword is 6, namely, a quantity of elements included in the one-dimensional vector

It should be noted that when the codeword corresponding to all the one-dimensional vectors in the $i^{th}$ vector group is determined, the element values at the corresponding locations in all the one-dimensional vectors in the $i^{th}$ vector group may be alternatively processed in another data processing manner, for example, weighted averaging may be performed. A specific processing manner may be selected based on an actual situation. This is not limited in this embodiment of this application.

Step A3: Determine the n codewords as the codeword corresponding to the initial weight matrix, and form, by using the index values corresponding to the n codewords and index numbers corresponding to the index values, the index corresponding to the initial weight matrix.

In this implementation, after the initial weight matrix is divided into the k submatrices of a same dimension and the index numbers corresponding to the k submatrices of a same dimension are determined in step A2, and after the n codewords corresponding to the k submatrices of a same dimension and the index values corresponding to the n codewords are determined in step A2, the n codewords may be determined as the codeword corresponding to the initial weight matrix for storage, or the n codewords may form a dictionary for storage. In addition, the index values (for example, 1, 2, ..., and n) corresponding to the n codewords and the index numbers (for example, $i_0$, $i_1$, ..., and $i_{k-1}$) form the index corresponding to the initial weight.

It should be noted that the submatrix and the index number are in a one-to-one correspondence (in other words, one submatrix corresponds to one index number), the codeword and the index value are in a one-to-one correspondence (in other words, one codeword corresponds to one index value), the codeword is a central vector (for example, an average vector) of a vector group, and each vector in the vector group corresponds to one submatrix. Therefore, one codeword can correspondingly represent a plurality of submatrices, and therefore it may be obtained that one index value may correspond to a plurality of index numbers.

Further, after the codeword and the index corresponding to the initial weight matrix are determined, the codeword may be stored in the memory, and storage space occupied by the codeword is far less than that required to directly store the initial weight matrix of the memory. Alternatively, the codeword and the index may be stored in a memory, and storage space occupied by the codeword and the index is far less than that required to directly store the initial weight matrix of the memory. Therefore, storage space occupied by a parameter amount in the memory can be greatly reduced, and usually a compression ratio may be approximately 40 times. For example, for a weight matrix of 528 MB, after preprocessing in the foregoing process is performed on the weight matrix, it may be obtained that a codeword and an index corresponding to the weight matrix correspond to a total of 14.45 MB, the codeword corresponds to 1.16 MB, the index corresponds to 13.29 MB, and a compression ratio is approximately 40 times.

It should be noted that after the codeword and the index corresponding to the initial weight matrix are determined, the codeword and the index may alternatively be stored in an external storage (for example, a hard disk), and then the external storage inputs the codeword and the index to the memory. A specific storage location is not limited in this embodiment of this application.

S302: Determine, based on the codeword, that a weight matrix of the neural network model is the first weight matrix, and train the first weight matrix by using training data.

In this embodiment, after the codeword corresponding to the initial weight matrix of the neural network model is obtained from the memory in step S301, a new weight matrix (which is defined as the first weight matrix herein) of the neural network model may be further determined based on the obtained codeword. In an optional implementation, an index that represents a correspondence between the codeword and the weight matrix of the neural network model further needs to be obtained, and then the first weight matrix of the neural network model may be determined based on an obtained correspondence between the codeword, the index, and the weight matrix.

Specifically, the first weight matrix of the neural network model may be obtained through decoding by using the one-to-one correspondence between the codeword and the index value, a one-to-many relationship between the index value and the index number, and the one-to-one correspondence between the index number and the submatrix, and the first weight matrix of the neural network model may be trained by using the training data. A specific calculation formula is as follows:

$$W = D_{mat} \cdot I_{oh} \tag{2},$$

where

$D_{mat}$ represents the first weight matrix that includes the codeword, and a dimension of the matrix is $c \times n$, where c represents a length of the codeword, and n represents a quantity of codewords; and $I_{oh}$ represents a one-hot matrix that includes the index, a dimension of the matrix is $n \times k$, and based on a feature of the one-hot matrix, in each row, a value only at a location corresponding to the index number is 1, and a value at another location is 0.

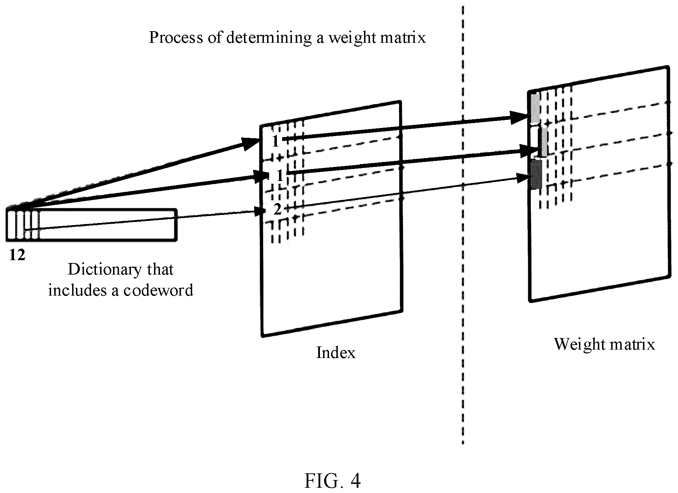

For example, as shown in FIG. 4, a left diagram shows the dictionary that includes the n codewords, namely, a first codeword, a second codeword, ..., and an nth codeword, and a middle diagram shows the index that includes the index values (namely, 1, 2, ..., and n) corresponding to the n codewords and the index numbers (namely, $i_0$, $i_1$, ..., and $i_{k-1}$). As indicated by a black thick arrow in the figure, the first codeword in the dictionary corresponds to an index value " 1", the index value corresponds to two index numbers, namely, an index number in the first row and the first column and an index number in the second row and the second column in an index diagram, and the two index numbers respectively correspond to two submatrices, namely, a submatrix represented by a light gray square in the first row and the first column and a submatrix represented in light gray in the second row and the second column in a right weight matrix diagram, in the weight matrix of the neural network model. Therefore, the submatrix in the first row and the first column and the submatrix in the second row and the second column in the weight matrix may be obtained through decoding based on the first codeword in the dictionary by using such a correspondence.

Similarly, as indicated by a black thin arrow in FIG. 4, the second codeword corresponds to an index value "2", the index value corresponds to one index number, namely, an index number in the third row and the first column in the index diagram, and the index number corresponds to a submatrix, namely, a submatrix represented by a dark gray square in the third row and the first column in the right weight matrix diagram, in the weight matrix of the neural network model. Therefore, the submatrix in the third row and the first column in the weight matrix may be obtained through decoding based on the second codeword in the dictionary by using such a correspondence, and by analogy, the entire weight matrix of the neural network model may be obtained through decoding by using each codeword in the dictionary and a correspondence between the codeword, the index, and the submatrix in the weight matrix. Then, the weight matrix may be trained by using the training data.

However, it should be noted that the codeword is generated after clustering and averaging are performed on the submatrices corresponding to the initial matrix in steps A21 to A23. Therefore, data space occupied by the first weight matrix of the neural network model determined by using the codeword and the index is consistent with data space occupied by the initial weight matrix. However, weight elements included in the first weight matrix and the initial weight matrix are not exactly the same, and therefore weight values of the first weight matrix and the initial weight matrix are not exactly the same, but the weight values of the first weight matrix and the initial weight matrix are very close to each other, in other words, the determined weight matrix of the neural network model may be used to replace the initial weight matrix to perform model training.

S303: Update the codeword when a preset stop condition is not met, to obtain an updated codeword.

In this embodiment, after the first weight matrix of the neural network model is trained by using the training data in step S302, it further needs to be determined whether the preset stop condition is met. The preset stop condition is a preset condition that needs to be met when training is stopped. The preset stop condition may be that a difference between a result label value of the training data and a result output by the model for the training data is less than a preset difference; may be that a change rate of a difference between a result label value of the training data and a result output by the model for the training data is less than a preset change threshold; may be that a quantity of update times of a model parameter reaches a preset quantity (for example, 100) of update times; or may be that an output value (loss) of a loss function that represents a difference between a result output by the model and a target result value reaches a preset threshold (for example, 0.1). When the preset stop condition is not met, the codeword needs to be updated based on a current training result, to obtain the updated code, so as to train the model again by performing subsequent step S304.

In a possible implementation of this embodiment, a specific implementation process of step S303 may include the following steps B1 and B2:

Step B1: Determine a weight gradient of the first weight matrix of the neural network model when the preset stop condition is not met.

In this implementation, after the first weight matrix of the neural network model is trained by using the training data in step S302, if it is determined that the preset stop condition is not met, for example, the loss value does not reach the preset threshold, reverse calculation may be performed by using the loss value, to determine the weight gradient (which is defined as the first weight gradients herein) of the first weight matrix of the neural network model, so as to perform subsequent step B2.

Step B2: Determine a codeword gradient based on the first weight gradient and the index, and determine the updated codeword based on the codeword gradient.

In this implementation, after the weight gradient of the first weight matrix of the neural network model is determined in step B1, the codeword gradient may be further determined based on the correspondence between the codeword, the index, and the weight matrix. Specifically, weight gradients of submatrices corresponding to index numbers that belong to a same codeword are processed by using the one-to-one correspondence between the codeword and the index value, the one-to-many relationship between the index value and the index number, and the one-to-one correspondence between the index number and the submatrix, to obtain a codeword gradient corresponding to the codeword. A specific calculation formula is as follows:

$$g_D = g_w \cdot I_{oh}^T \tag{3},$$

where

$g_D$ represents the codeword gradient, $I_{oh}^T$ represents transposition of the one-hot matrix $I_{oh}$ that includes the index, and $g_w$ represents the weight gradient of the first weight matrix of the neural network model.

Specifically, in an optional implementation, a specific implementation process of step B2 may include the following steps B21 to B23:

Step B21: Perform weighted summation on weight gradients that are in the weight gradient and that are of submatrices corresponding to index numbers that belong to a jth codeword, to obtain a codeword gradient corresponding to the jth

codeword, where j is an integer that ranges from 1 to n.

In this implementation, to obtain the updated codeword, weight gradients of submatrices corresponding to index numbers that belong to a same codeword need to be processed, and an updated value corresponding to the codeword needs to be determined based on a processing result. Specifically, the $j^{th}$ codeword is used as an example (j may be any integer that ranges from 1 to n). The codeword may correspond to a plurality of index numbers, and each index number corresponds to one submatrix. Therefore, weighted summation calculation may be performed on weight gradients of submatrices corresponding to all the index numbers, and a calculation result may be used as the codeword gradient corresponding to the $j^{th}$ codeword.

It should be noted that when the codeword gradient corresponding to the $j^{th}$ codeword is determined, the weight gradients of the submatrices corresponding to all the index numbers that belong to the $j^{th}$ codeword may alternatively be processed in another data processing manner, for example, cumulative summation may be directly performed. A specific processing manner may be selected based on an actual situation. This is not limited in this embodiment of this application.

Step B22: Optimize the codeword gradient corresponding to the $j^{th}$ codeword, to obtain an update amount of the $j^{th}$ codeword.

In this implementation, after the codeword gradient corresponding to the $j^{th}$ codeword is obtained in step B21, the codeword gradient may be further optimized, to obtain the update amount of the $j^{th}$ codeword. For example, the codeword gradient corresponding to the $j^{th}$ codeword may be optimized by using a relatively widely used Adam optimizer, to obtain the update amount of the $j^{th}$ codeword. Four intermediate parameters, namely, a first-order momentum $m_t$, a second-order momentum $v_t$, a first-order momentum correction value $\hat{m}_t$, and a second-order momentum correction value $\hat{v}_t$ are generated in an optimization process. It should be noted that a data amount of each of the four intermediate parameters (namely, $m_t$, $v_t$, $\hat{m}_t$, and $\hat{v}_t$) generated in the optimization process is consistent with a data amount of the codeword gradient of the $j^{th}$ codeword.

Step B23: Update the $j^{th}$ codeword by using the update amount of the $j^{th}$ codeword, to obtain an updated $j^{th}$ codeword.

In this implementation, after the update amount of the $j^{th}$ codeword is obtained in step B22, the $j^{th}$ codeword may be further updated by using the update amount, for example, a result obtained after the update amount is subtracted from the $j^{th}$ codeword or a result obtained after the $j^{th}$ codeword and the update amount are added may be used as the updated $j^{th}$ codeword, to perform subsequent step S305.

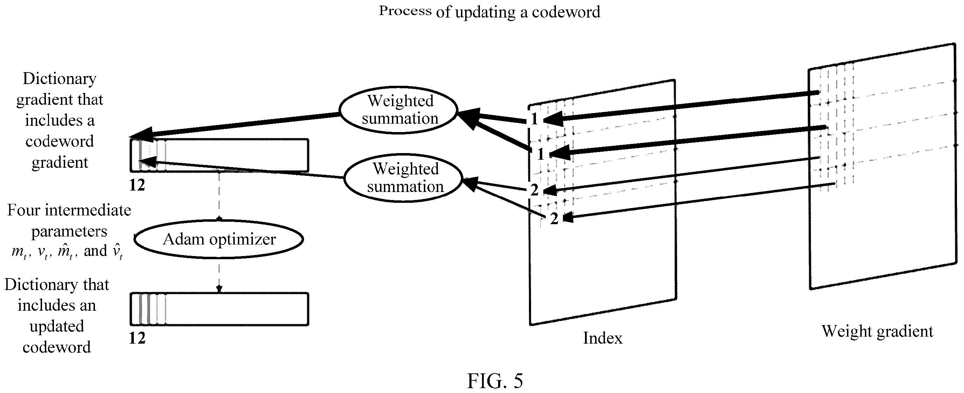

For example, as shown in FIG. 5, a right diagram shows the weight gradient of the weight matrix, and a middle diagram shows the index that includes the index values (namely, 1, 2, , and n) corresponding to the n codewords and the index numbers (namely, $i_0$, $i_1$, ..., and $i_{k-1}$) corresponding to the index values. As indicated by a black thick arrow in the figure, a first codeword in a dictionary corresponds to an index value " 1", the index value corresponds to two index numbers, namely, an index number in the first row and the first column and an index number in the second row and the second column in an index diagram, and the two index numbers respectively correspond to weight gradients, namely, a weight gradient in the first row and the first column and a weight gradient in the second row and the second column in a right weight gradient diagram, of two submatrices in the weight gradient of the weight matrix. Therefore, weighted summation may be performed on the two weight gradients, to obtain a codeword gradient corresponding to the first codeword. Similarly, as indicated by a black thin arrow in FIG. 5, a second codeword corresponds to an index value "2", the index value corresponds to two index numbers, namely, an index number in the third row and the first column and an index number in the fourth row and the third column in the index diagram, and the two index numbers respectively correspond to weight gradients, namely, a weight gradient in the third row and the first column and a weight gradient in the fourth row and the third column in the right weight gradient diagram, of two submatrixes in the weight gradient of the weight matrix. Therefore, weighted summation may be performed on the two weight gradients, to obtain a codeword gradient corresponding to the second codeword, and by analogy, a codeword gradient corresponding to each codeword may be determined. Then, each codeword gradient may be optimized by using the Adam optimizer, to obtain an update amount of each codeword, and then each codeword is updated by using the update amount of each codeword, to obtain each updated codeword.

S304. Store the updated codeword in the memory.

In this embodiment, after each updated codeword is obtained in step S303, the updated codeword may be further stored in the memory, to perform subsequent step S305.

S305: Determine, by using the updated codeword obtained from the memory, that the weight matrix of the neural network model is a second weight matrix, and train the second weight matrix by using training data.

In this embodiment, after the updated codeword is stored in the memory in step S304, a new weight matrix (which is defined as the second weight matrix herein, and used to replace the first weight matrix described in step S302) of the neural network model may be further determined by performing step S302 by using the updated codeword obtained from the memory, and a next round of model training may be performed on the second weight matrix of the neural network model by using the training data. For a specific implementation process, refer to the description in step S302.

Details are not described herein.

It should be noted that after the second weight matrix of the neural network model is trained by using the training data in step S302, when it is determined that the preset stop condition is still not met, to save memory space, the current weight matrix of the neural network model may be released in the memory, and then a new weight matrix of the neural network model is determined by performing steps S303 to S305, to perform a next round of model training.

S306: Stop training of the neural network model when the preset stop condition is met.

In this embodiment, after a next round of model training is performed on the second weight matrix (or a subsequent new weight matrix) of the neural network model by using the training data in step S305, it further needs to be determined whether the preset stop condition is met, for example, it needs to be determined whether the loss value reaches the preset threshold. When the preset stop condition is still not met, the codeword needs to be updated again based on a result of the round of model training, to obtain a new updated codeword, so as to train the model again by performing step S305. By analogy, when the preset stop condition is not met, the step of updating the codeword and subsequent steps (namely, steps S303 and S305) are repeatedly performed, until training of the neural network model is stopped when the preset stop condition is met.

In conclusion, in the neural network model training method provided in this embodiment, when the neural network model is trained, the codeword corresponding to the first weight matrix of the neural network model is obtained from the memory; it is determined, based on the codeword, that the weight matrix of the neural network model is the first weight matrix, and the first weight matrix is trained by using the training data; the codeword is updated when the preset stop condition is not met, to obtain the updated codeword; the updated codeword is stored in the memory; it is determined, by using the updated codeword obtained from the memory, that the weight matrix of the neural network model is the second weight matrix, and the second weight matrix is trained by using the training data; and training of the neural network model is stopped when the preset stop condition is met. It may be learned that in this embodiment of this application, when the neural network model is trained, the weight matrix is no longer directly read from the memory, but the codeword and the index corresponding to the weight matrix are read, to form a weight matrix for training. Memory space occupied by the codeword is far less than memory space occupied by the weight matrix, and therefore a data amount read from the memory can be greatly reduced, and a memory bottleneck problem can be overcome. In addition, in this application, in a model training process, an update amount of the weight matrix is no longer calculated, but an update amount of the codeword is calculated, to determine a new weight matrix for subsequent training. Therefore, a calculation amount of an intermediate parameter existing in an updating process can be reduced, so that the neural network model can be smoothly trained in a resource-limited scenario.

For example, when a classification network VGG16 is trained by using an existing method, a data amount of a weight matrix that is read is 528 MB, a generated weight gradient corresponds to 528 MB, and a data amount of each of four intermediate parameters (namely, $mt, v_t, \hat{m}_t,$ and $\hat{v}_t$) generated in a process of optimizing the weight gradient is also 528 MB. Therefore, a total of required memory space is 3.17 GB. However, when VGG16 is trained by using the model training method provided in this application, a codeword and an index corresponding to a weight matrix are read, the codeword and the index correspond to a total of 14.45 MB, the codeword corresponds to 1.16 MB, the index corresponds to 13.29 MB, a generated codeword gradient corresponds to 1.16 MB, and a data amount of each of four intermediate parameters (namely, $m_t, v_t, \hat{m}_t,$ and $\hat{v}_t$) generated in a process of optimizing the weight gradient is also 1.16 MB. Therefore, a total of required memory space is 20.25 MB, and there is a great reduction in a calculated data amount in comparison with 3.17 GB.

When a translation network model transformer is trained by using an existing method, a data amount of a weight matrix that is read is 471 MB, a generated weight gradient corresponds to 471 MB, and a data amount of each of four intermediate parameters (namely, $m_t, v_t, \hat{m}_t,$ and $\hat{v}_t$) generated in a process of optimizing the weight gradient is also 471 MB. Therefore, a total of required memory space is 2.76 GB. However, when transformer is trained by using the model training method provided in this application, a codeword and an index corresponding to a weight matrix are read, the codeword and the index correspond to a total of 11.46 MB, the codeword corresponds to 0.12 MB, the index corresponds to 11.34 MB, a generated codeword gradient corresponds to 0.12 MB, and a data amount of each of four intermediate parameters (namely, $mt, v_t, \hat{m}_t,$ and $\hat{v}_t$) generated in a process of optimizing the weight gradient is also 0.12 MB. Therefore, a total of required memory space is 12.06 MB, and there is a great reduction in a calculated data amount in comparison with 2.76 GB.

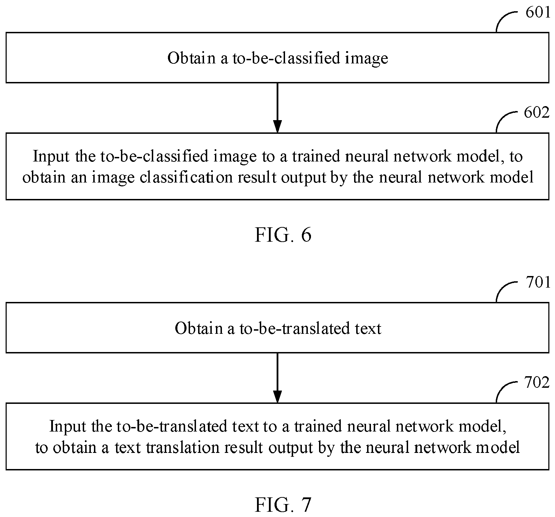

In addition, an embodiment of this application further provides an image classification method. Based on the neural network model training method provided in the foregoing embodiment, a neural network model obtained according to the neural network model training method may be applied to image classification. FIG. 6 is a flowchart of an image classification method according to an embodiment of this application. The method may include the following steps.

S601: Obtain a to-be-classified image.

S602: Input the to-be-classified image to the trained neural network model, to obtain an image classification result output by the neural network model.

In this embodiment, the to-be-classified image is obtained; and the to-be-classified image is input to the pre-trained neural network model, to obtain the image classification result corresponding to the to-be-classified image. During specific implementation, the neural network model may output not only the classification result corresponding to the to-be-classified image, but also a probability value corresponding to each classification result, so that a user can directly learn of a classification status of the to-be-classified image.

For example, the to-be-classified image is a medical image, the used neural network model is a model that can classify the medical image, and a specific classification result of the medical image may be obtained by inputting the medical image (or a feature map corresponding to the medial image) to the neural network model. For example, it may be recognized whether the input medical image is a medical image that carries a specific feature or has a specific classification result, or a medical image that does not carry a specific feature or have a specific classification result.

A process of training the neural network model includes:

obtaining a codeword from a memory, where the codeword corresponds to a first weight matrix of the neural network model;

determining, based on the codeword, that a weight matrix of the neural network model is the first weight matrix, and training the first weight matrix by using training data;

updating the codeword when a preset stop condition is not met, to obtain an updated codeword;

storing the updated codeword in the memory;

determining, by using the updated codeword obtained from the memory, that the weight matrix of the neural network model is a second weight matrix, and training the second weight matrix by using training data; and

stopping training of the neural network model when the preset stop condition is met.

It should be noted that the training data in this embodiment may include a positive sample image and a negative sample image. The positive sample image is a to-be-trained image that carries a specific feature or has a specific classification result, and a result label value of the positive sample image may be 1. The negative sample image is a to-be-trained image that does not carry a specific feature or have a specific classification result, and a result label value of the negative sample image may be 0. A result output by the current to-be-trained neural network model for the training data may be a probability value that indicates that the training data is a positive sample image, that is output by the current to-be-trained neural network model, and that exists after the training data is input to the current to-be-trained neural network model.

In a possible implementation of this embodiment, when the first weight matrix is an initial weight matrix, the method further includes:
dividing the initial weight matrix, to determine a codeword corresponding to the initial weight matrix.

In a possible implementation of this embodiment, the dividing the initial weight matrix, to determine a codeword corresponding to the initial weight matrix includes:

dividing the initial weight matrix into k submatrices in a same dimension, where k is a positive integer greater than 1;

performing clustering processing on the k submatrices of a same dimension, to obtain n codewords corresponding to the k submatrices of a same dimension, wherein n is a positive integer greater than 0, and $n \leq k$; and

determining the n codewords as the codeword corresponding to the initial weight matrix.

In a possible implementation of this embodiment, the performing clustering processing on the k submatrices of a same dimension, to obtain n codewords corresponding to the k submatrices of a same dimension includes:

reducing each of the k submatrices of a same dimension to a one-dimensional vector, to obtain k one-dimensional vectors;

grouping the k one-dimensional vectors into n vector groups, wherein each vector group comprises at least one one-dimensional vector; and

performing average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, wherein i is an integer that ranges from 1 to n.

In an implementation manner of this embodiment of the present invention, the method further includes:
releasing the weight matrix of the neural network model in the memory when the preset stop condition is not met.

In an implementation of this embodiment, the updating the codeword when a preset stop condition is not met, to obtain an updated codeword includes:

determining a weight gradient of the first weight matrix of the neural network model when the preset stop condition is not met; and

determining a codeword gradient based on the first weight gradient, and determining the updated codeword based on the codeword gradient.

In an implementation of this embodiment, the determining a codeword gradient based on the weight gradient, and determining the updated codeword based on the codeword gradient includes:

performing weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;

optimizing the codeword gradient corresponding to the $j^{th}$ codeword, to obtain an update amount of the $j^{th}$ codeword; and

updating the $j^{th}$ codeword by using the update amount of the $j^{th}$ codeword, to obtain an updated $j^{th}$ codeword.

In an implementation manner of this embodiment of the present invention, the method further includes: obtaining an index, where the index is a correspondence between the codeword and the weight matrix of the neural network model.

In an implementation of this embodiment, the preset stop condition includes one or more of the following conditions:

a difference between a result label value corresponding to the training data and the result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

It should be further noted that for description of a specific process of training the neural network model in this embodiment, refer to the procedure of the method in FIG. 3. Details are not described herein in this embodiment.

In this embodiment of this application, the to-be-classified image is classified by using the pre-trained neural network model. The neural network model can achieve global optimality, and therefore the classification result output by the neural network model is more accurate, to improve accuracy of the classification result.

In addition, an embodiment of this application further provides a text translation method. Based on the neural network model training method provided in the foregoing embodiment, a neural network model obtained according to the neural network model training method may be applied to text translation. FIG. 7 is a flowchart of a text translation method according to an embodiment of this application. The method may include the following steps.

S701: Obtain to-be-translated text.

S702: Input the to-be-translated text to the trained neural network model, to obtain a text translation result output by the neural network model.

In this embodiment, the to-be-translated text is obtained; and the to-be-translated text is input to the pre-trained neural network model, to obtain the text translation result corresponding to the to-be-translated text. For example, English text is translated into Chinese text, and a Chinese translation result is output by using the pre-trained neural network model; or Chinese text is translated into German text, and a German text translation result is output by using the pre-trained neural network model. A language for translation is not limited in this application.

For example, the to-be-translated text is English text, the used neural network model is a model that can translate the to-be-translated text, and a specific translation result of the English text may be obtained by inputting the to-be-translated text (or a feature vector corresponding to the to-be-translated text) to the neural network model. For example, a Chinese text translation result or a German text translation result of the input English text may be obtained through translation.

A process of training the neural network model includes:

obtaining a codeword from a memory, where the codeword corresponds to a first weight matrix of the neural network model;

determining, based on the codeword, that a weight matrix of the neural network model is the first weight matrix, and training the first weight matrix by using training data;

updating the codeword when a preset stop condition is not met, to obtain an updated codeword;

storing the updated codeword in the memory;
determining, by using the updated codeword obtained from the memory, that the weight matrix of the neural network model is a second weight matrix, and training the second weight matrix by using training data; and
stopping training of the neural network model when the preset stop condition is met.

In a possible implementation of this embodiment, when the first weight matrix is an initial weight matrix, the method further includes:
dividing the initial weight matrix, to determine a codeword corresponding to the initial weight matrix.

In a possible implementation of this embodiment, the dividing the initial weight matrix, to determine a codeword corresponding to the initial weight matrix includes:

dividing the initial weight matrix into k submatrices in a same dimension, wherein k is a positive integer greater than 1;
performing clustering processing on the k submatrices of a same dimension, to obtain n codewords corresponding to the k submatrices of a same dimension, wherein n is a positive integer greater than 0, and $n \leq k$; and
determining the n codewords as the codeword corresponding to the initial weight matrix.

In a possible implementation of this embodiment, the performing clustering processing on the k submatrices of a same dimension, to obtain n codewords corresponding to the k submatrices of a same dimension includes:

reducing each of the k submatrices of a same dimension into a one-dimensional vector, to obtain k one-dimensional vectors;
grouping the k one-dimensional vectors into n vector groups, wherein each vector group comprises at least one one-dimensional vector; and
performing average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, wherein i is an integer that ranges from 1 to n.

In an implementation manner of this embodiment of the present invention, the method further includes:
releasing the weight matrix of the neural network model in the memory when the preset stop condition is not met.

In an implementation of this embodiment, the updating the codeword when a preset stop condition is not met, to obtain an updated codeword includes:

determining a weight gradient of the first weight matrix of the neural network model when the preset stop condition is not met; and
determining a codeword gradient based on the first weight gradient, and determining the updated codeword based on the codeword gradient.

In an implementation of this embodiment, the determining a codeword gradient based on the weight gradient, and determining the updated codeword based on the codeword gradient includes:

performing weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;
optimizing the codeword gradient corresponding to the $j^{th}$ codeword, to obtain an update amount of the $j^{th}$ codeword; and
updating the $j^{th}$ codeword by using the update amount of the $j^{th}$ codeword, to obtain an updated $j^{th}$ codeword.

In an implementation manner of this embodiment of the present invention, the method further includes:
obtaining an index, where the index is a correspondence between the codeword and the weight matrix of the neural network model.

In an implementation of this embodiment, the preset stop condition includes one or more of the following conditions:

a difference between a result label value corresponding to the training data and a result output by the neural network model for the training data is less than a preset difference;
a change rate of the difference between the result label value corresponding to the training data and the result output by the neural network model for the training data is less than a preset change threshold;
a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

It should be further noted that for description of a specific process of training the neural network model in this embodiment, refer to the procedure of the method in FIG. 3. Details are not described herein in this embodiment.

In this embodiment of this application, the to-be-translated text is translated by using the pre-trained neural network model. The neural network model can achieve global optimality, and therefore the translation result output by the neural network model is more accurate, to improve accuracy of the translation result.

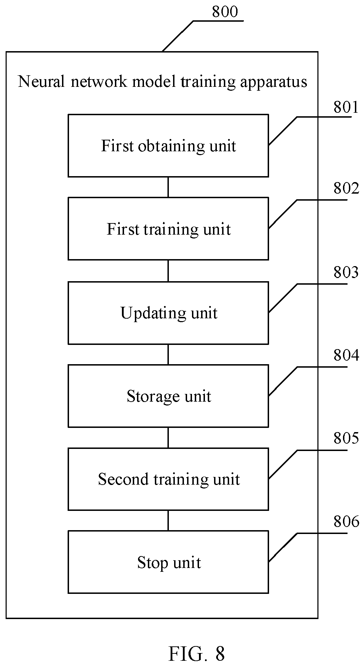

To better implement the foregoing solutions in the embodiments of this application, the following further provides a related apparatus for implementing the foregoing solutions. Referring to FIG. 8, an embodiment of this application provides a neural network model training apparatus 800. The apparatus 800 may include a first obtaining unit 801, a first training unit 802, an updating unit 803, a storage unit 804, a second training unit 805, and a stop unit 806. The first obtaining unit 801 is configured to support the apparatus 800 in performing S301 in the embodiment shown in FIG. 3. The first training unit 802 is configured to support the apparatus 800 in performing S302 in the embodiment shown in FIG. 3. The updating unit 803 is configured to support the apparatus 800 in performing S303 in the embodiment shown in FIG. 3. The storage unit 804 is configured to support the apparatus 800 in performing S304 in the embodiment shown in FIG. 3. The second training unit 805 is configured to support the apparatus 800 in performing S305 in the embodiment shown in FIG. 3. The stop unit 806 is configured to support the apparatus 800 in performing S306 in the embodiment shown in FIG. 3.

The first obtaining unit 801 is configured to obtain a codeword from a memory. The codeword corresponds to a first weight matrix of a neural network model.

The first training unit 802 is configured to: determine, based on the codeword, that a weight matrix of the neural network model is the first weight matrix, and train the first weight matrix by using training data.

The updating unit 803 is configured to update the codeword when a preset stop condition is not met, to obtain an updated codeword.

The storage unit 804 is configured to store the updated codeword in the memory.

The second training unit 805 is configured to: determine, by using the updated codeword obtained from the memory, that the weight matrix of the neural network model is a second weight matrix, and train the second weight matrix by using training data.

The stop unit 806 is configured to stop training of the neural network model when the preset stop condition is met.

In a possible implementation of this embodiment, when the first weight matrix is an initial weight matrix, the apparatus further includes:

a division unit, configured to divide the initial weight matrix, to determine a codeword corresponding to the initial weight matrix.

In an implementation of this embodiment, the division unit includes:

a first division subunit, configured to divide the initial weight matrix into k submatrices of a same dimension, where k is a positive integer greater than 1;

a clustering subunit, configured to perform clustering processing on the k submatrices of a same dimension, to obtain n codewords corresponding to the k submatrices of a same dimension, where n is a positive integer greater than 0, and $n \leq k$; and

a first determining subunit, configured to determine the n codewords as the codeword corresponding to the initial weight matrix

In an implementation of this embodiment, the clustering subunit includes:

a dimension reduction subunit, configured to reduce each of the k submatrixes of a same dimension into a one-dimensional vector, to obtain k one-dimensional vectors;

a second grouping subunit, configured to group the k one-dimensional vectors into n vector groups, where each vector group includes at least one one-dimensional vector; and

a calculation subunit, configured to perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In an implementation manner of this embodiment, the apparatus may further include:

a releasing unit, configured to release the weight matrix of the neural network model in the memory when the preset stop condition is not met.

In an implementation of this embodiment, the updating unit 803 includes:

a second determining subunit, configured to determine a weight gradient of the first weight matrix of the neural network model when the preset stop condition is not met; and

a third determining subunit, configured to: determine a codeword gradient based on the first weight gradient, and determine the updated codeword based on the codeword gradient.

In an implementation of this embodiment, the third determining subunit includes:

a first obtaining subunit, configured to perform weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;

a second obtaining subunit, configured to optimize the codeword gradient corresponding to the $j^{th}$ codeword, to obtain an update amount of the $j^{th}$ codeword; and

a third obtaining subunit, configured to update the $j^{th}$ codeword by using the update amount of the $j^{th}$ codeword, to obtain an updated $j^{th}$ codeword.

In an implementation manner of this embodiment, the apparatus may further include:

a second obtaining unit, configured to obtain an index, where the index is a correspondence between the codeword and the weight matrix of the neural network model.

In an implementation of this embodiment, the preset stop condition includes one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

In conclusion, in the neural network model training apparatus provided in this embodiment, when the neural network model is trained, the codeword corresponding to the first weight matrix of the neural network model is obtained from the memory; it is determined, based on the codeword, that the weight matrix of the neural network model is the first weight matrix, and the first weight matrix is trained by using the training data; the codeword is updated when the preset stop condition is not met, to obtain the updated codeword; the updated codeword is stored in the memory; it is determined, by using the updated codeword obtained from the memory, that the weight matrix of the neural network model is the second weight matrix, and the second weight matrix is trained by using the training data; and training of the neural network model is stopped when the preset stop condition is met. It may be learned that in this embodiment of this application, when the neural network model is trained, the weight matrix is no longer directly read from the memory, but the codeword corresponding to the weight matrix is read, to form a weight matrix for training. Memory space occupied by the codeword is far less than memory space occupied by the weight matrix, and therefore a data amount read from the memory can be greatly reduced, and a memory bottleneck problem can be overcome. In addition, in this application, in a model training process, an update amount of the weight matrix is no longer calculated, but an update amount of the codeword is calculated, to determine a new weight matrix for subsequent training. Therefore, a calculation amount of an intermediate parameter existing in an updating process can be reduced, so that the neural network model can be smoothly trained in a resource-limited scenario.

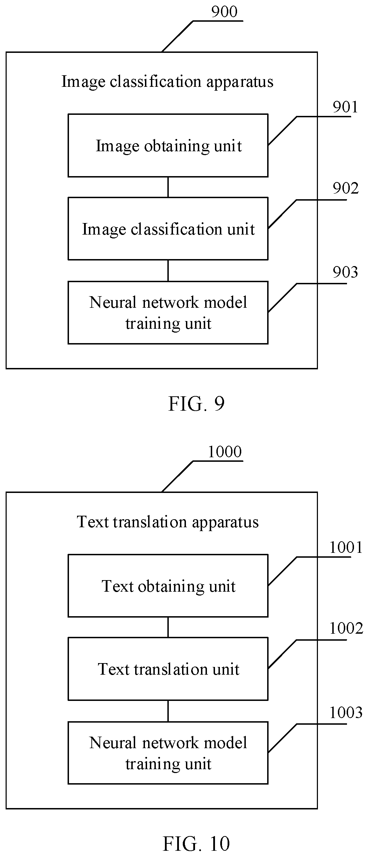

Referring to FIG. 9, an embodiment of this application further provides an image classification apparatus 900. The apparatus 900 may include an image obtaining unit 901, an image classification unit 902, and a neural network model training unit 903. The image acquiring unit 901 is configured to support the apparatus 900 in performing S601 in the embodiment shown in FIG. 6. The image classification unit 902 is configured to support the apparatus 900 in performing S602 in the embodiment shown in FIG. 6. The neural network model training unit 903 is configured to support the apparatus 900 in performing S301 to S306 in the embodiment shown in FIG. 3. Specifically,

The image obtaining unit 901 is configured to obtain a to-be-classified image.

The image classification unit 902 is configured to input the to-be-classified image to a trained neural network model, to obtain an image classification result output by the neural network model.

The neural network model training unit 903 is configured to train the neural network model.

The neural network model training unit 903 includes:

a first obtaining unit, configured to obtain a codeword from a memory, where the codeword corresponds to a first weight matrix of the neural network model;

a first training unit, configured to: determine, based on the codeword, that a weight matrix of the neural network model is the first weight matrix, and train the first weight matrix by using training data, where the training data includes a positive sample image and a negative sample image;

an updating unit, configured to: after the neural network model outputs a probability value indicating that the training data is a positive sample image, update the codeword when a preset stop condition is not met, to obtain an updated codeword;

a storage unit, configured to store the updated codeword in the memory;

a second training unit, configured to: determine, by using the updated codeword obtained from the memory, that the weight matrix of the neural network model is a second weight matrix, and train the second weight matrix by using training data; and

a stop unit, configured to stop training of the neural network model when the preset stop condition is met.

In a possible implementation of this embodiment, when the first weight matrix is an initial weight matrix, the apparatus further includes:

a division unit, configured to divide the initial weight matrix, to determine a codeword corresponding to the initial weight matrix.

In an implementation of this embodiment, the division unit includes:

a first division subunit, configured to divide the initial weight matrix into k submatrices of a same dimension, where k is a positive integer greater than 1;

a clustering subunit, configured to perform clustering processing on the k submatrices of a same dimension, to obtain n codewords corresponding to the k submatrices of a same dimension, where n is a positive integer greater than 0, and $n \leq k$; and

a first determining subunit, configured to determine the n codewords as the codeword corresponding to the initial weight matrix

In an implementation of this embodiment, the clustering subunit includes:

a dimension reduction subunit, configured to reduce each of the k submatrixes of a same dimension into a one-dimensional vector, to obtain k one-dimensional vectors;

a second grouping subunit, configured to group the k one-dimensional vectors into n vector groups, wherein each vector group comprises at least one one-dimensional vector; and

a calculation subunit, configured to perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In an implementation manner of this embodiment, the apparatus may further include:

a releasing unit, configured to release the weight matrix of the neural network model in the memory when the preset stop condition is not met.

In an implementation of this embodiment, the updating unit includes:

a second determining subunit, configured to determine a weight gradient of the first weight matrix of the neural network model when the preset stop condition is not met; and

a third determining subunit, configured to: determine a codeword gradient based on the first weight gradient, and determine the updated codeword based on the codeword gradient.

In an implementation of this embodiment, the third determining subunit includes:

a first obtaining subunit, configured to perform weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;

a second obtaining subunit, configured to optimize the codeword gradient corresponding to the $j^{th}$ codeword, to obtain an update amount of the $j^{th}$ codeword; and
a third obtaining subunit, configured to update the $j^{th}$ codeword by using the update amount of the $j^{th}$ codeword, to obtain an updated $j^{th}$ codeword.

In an implementation manner of this embodiment, the apparatus may further include:
a second obtaining unit, configured to obtain an index, where the index is a correspondence between the codeword and the weight matrix of the neural network model.
In an implementation of this embodiment, the preset stop condition includes one or more of the following conditions:

a difference between a result label value corresponding to the training data and a result output by the neural network model for the training data is less than a preset difference;
a change rate of the difference between the result label value corresponding to the training data and the result output by the neural network model for the training data is less than a preset change threshold;
a quantity of update times of a model parameter in the neural network model reaches a preset quantity of update times; and
an output value of a loss function used by the neural network model reaches a preset threshold, where the loss function is used to measure the difference between the result output by the neural network model for the training data and the result label value corresponding to the training data.

Referring to FIG. 10, an embodiment of this application further provides a text translation apparatus 1000. The apparatus 1000 may include a text obtaining unit 1001, a text translation unit 1002, and a neural network model training unit 1003. The text obtaining unit 1001 is configured to support the apparatus 1000 in performing S701 in the embodiment shown in FIG. 7. The text translation unit 1002 is configured to support the apparatus 1000 in performing S702 in the embodiment shown in FIG. 7. The neural network model training unit 1003 is configured to support the apparatus 1000 in performing S301 to S306 in the embodiment shown in FIG. 3. Specifically,
[0189]  The text obtaining unit 1001 is configured to obtain to-be-translated text.
The text translation unit 1002 is configured to input the to-be-translated text to a trained neural network model, to obtain a text translation result output by the neural network model.
The neural network model training unit 1003 is configured to train the neural network model.
The neural network model training unit 1003 includes:

a first obtaining unit, configured to obtain a codeword from a memory, where the codeword corresponds to a first weight matrix of the neural network model;
a first training unit, configured to: determine, based on the codeword, that a weight matrix of the neural network model is the first weight matrix, and train the first weight matrix by using training data, where the training data is sample text;
an updating unit, configured to: after the neural network model outputs a translation result of the sample text, update the codeword when a preset stop condition is not met, to obtain an updated codeword;
a storage unit, configured to store the updated codeword in the memory;
a second training unit, configured to: determine, by using the updated codeword obtained from the memory, that the weight matrix of the neural network model is a second weight matrix, and train the second weight matrix of the neural network model by using training data; and
a stop unit, configured to stop training of the neural network model when the preset stop condition is met.

In a possible implementation of this embodiment, when the first weight matrix is an initial weight matrix, the apparatus further includes:
a division unit, configured to divide the initial weight matrix, to determine a codeword corresponding to the initial weight matrix.
In an implementation of this embodiment, the division unit includes:

a first division subunit, configured to divide the initial weight matrix into k submatrices of a same dimension, where k is a positive integer greater than 1;
a clustering subunit, configured to perform clustering processing on the k submatrices of a same dimension, to obtain n codewords corresponding to the k submatrices of a same dimension, where n is a positive integer greater than 0, and $n \le k$ ; and
a first determining subunit, configured to determine the n codewords as the codeword corresponding to the initial weight matrix

In an implementation of this embodiment, the clustering subunit includes:

a dimension reduction subunit, configured to reduce each of the k submatrixes of a same dimension into a one-dimensional vector, to obtain k one-dimensional vectors;

a second grouping subunit, configured to group the k one-dimensional vectors into n vector groups, where each vector group includes at least one one-dimensional vector; and

a calculation subunit, configured to perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, where i is an integer that ranges from 1 to n.

In an implementation manner of this embodiment, the apparatus may further include:

a releasing unit, configured to release the weight matrix of the neural network model in the memory when the preset stop condition is not met.

In an implementation of this embodiment, the updating unit includes:

a second determining subunit, configured to determine a weight gradient of the first weight matrix of the neural network model when the preset stop condition is not met; and

a third determining subunit, configured to: determine a codeword gradient based on the first weight gradient, and determine the updated codeword based on the codeword gradient.

In an implementation of this embodiment, the third determining subunit includes:

a first obtaining subunit, configured to perform weighted summation on weight gradients that are in the weight gradient and that are of submatrices corresponding to index numbers that belong to a $j^{th}$ codeword, to obtain a codeword gradient corresponding to the $j^{th}$ codeword, where j is an integer that ranges from 1 to n;

a second obtaining subunit, configured to optimize the codeword gradient corresponding to the $j^{th}$ codeword, to obtain an update amount of the $j^{th}$ codeword; and

a third obtaining subunit, configured to update the $j^{th}$ codeword by using the update amount of the $j^{th}$ codeword, to obtain an updated $j^{th}$ codeword.

In an implementation manner of this embodiment, the apparatus may further include:

a second obtaining unit, configured to obtain an index, where the index is a correspondence between the codeword and the weight matrix of the neural network model.

In an implementation of this embodiment, the preset stop condition includes one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, where the loss function is used to measure the difference between the result output by the neural network model for the training data and the result label value corresponding to the training data.

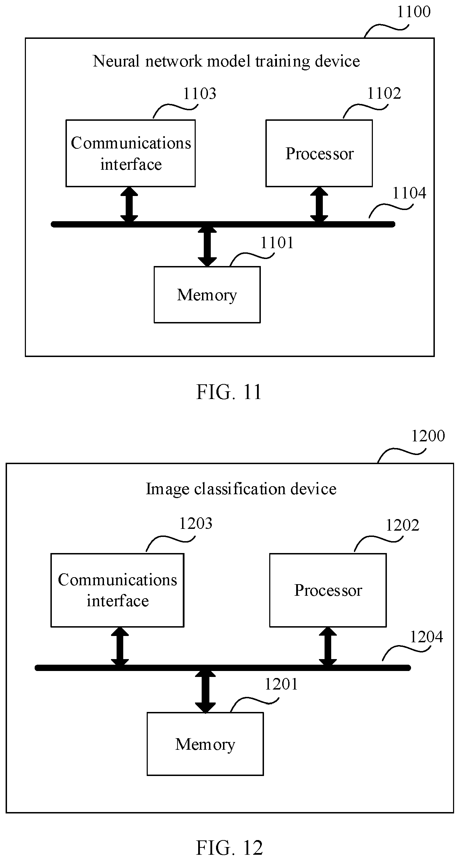

Referring to FIG. 11, an embodiment of this application provides a neural network model training device 1100. The device includes a storage 1101, a processor 1102, and a communications interface 1103.

a memory, configured to store instructions; and

The processor 1102 is configured to execute the instructions in the storage 1101, to perform the neural network model training method applied to the embodiment shown in FIG. 3.

The communications interface 1103 is configured to communicate.

The memory 1101, the processor 1102, and the communications interface 1103 are connected to each other by using a bus 1104. The bus 1104 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 11, but this does not mean that there is only one bus or only one type of bus.

In a specific embodiment, when training a neural network model, the processor 1102 is configured to: obtain a codeword corresponding to a first weight matrix of a neural network model from a memory; determine, based on the codeword, that a weight matrix of the neural network model is the first weight matrix, and train the first weight matrix by using training data; update the codeword when a preset stop condition is not met, to obtain an updated codeword; store the updated codeword in the memory; determine, by using the updated codeword obtained from the memory, that the weight matrix of the neural network model is a second weight matrix, and train the second weight matrix by using training data; and stop training of the neural network model when the preset stop condition is met. For a detailed processing process of the processor 1102, refer to the detailed description in S301, S302, S303, S304, S305, and S306 in the embodiment shown in FIG. 3. Details are not described herein.

The memory 1101 may be a random access memory (random-access memory, RAM), a flash (flash) memory, a read-only memory (read only memory, ROM), an erasable programmable read-only memory (erasable programmable read only memory, EPROM), an electrically erasable programmable read-only memory (electrically erasable programmable read only memory, EEPROM), a register (register), a hard disk, a removable hard disk, a CD-ROM, or any other form of storage medium known to a person skilled in the art.

The processor 1102 may be, for example, a central processing unit (central processing unit, CPU), a general-purpose processor, a digital signal processor (digital signal processor, DSP), an application-specific integrated circuit (application-specific integrated circuit, ASIC), or a field programmable gate array (field programmable gate array, FPGA) or another programmable logic device, a transistor logic device, a hardware component, or any combination thereof. The processor may implement or execute various example logical blocks, modules, and circuits described with reference to content disclosed in the embodiments of this application. Alternatively, the processor may be a combination of processors implementing a computing function, for example, a combination of one or more microprocessors, or a combination of a DSP and a microprocessor.

The communications interface 1103 may be, for example, an interface card, or may be an Ethernet (ethernet) interface or an asynchronous transfer mode (asynchronous transfer mode, ATM) interface.

Referring to FIG. 12, an embodiment of this application provides an image classification device 1200. The device includes a storage 1201, a processor 1202, and a communications interface 1203.

a memory, configured to store instructions; and

The processor 1202 is configured to execute the instructions in the storage 1201, to perform the image classification method applied to the embodiment shown in FIG. 6.

The communications interface 1203 is configured to communicate.

The memory 1201, the processor 1202, and the communications interface 1203 are connected to each other by using a bus 1204. The bus 1204 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 12, but this does not mean that there is only one bus or only one type of bus.

In a specific embodiment, during image classification, the processor 1201 is configured to: obtain a to-be-classified image; and input the to-be-classified image to a pre-trained neural network model, to obtain an image classification result corresponding to the to-be-classified image. For a detailed processing process of the processor 1202, refer to the detailed descriptions of S602 and S603 in the embodiment shown in FIG. 6. Details are not described herein again.

The memory 1201 may be a random access memory (random-access memory, RAM), a flash (flash) memory, a read-only memory (read only memory, ROM), an erasable programmable read-only memory (erasable programmable read only memory, EPROM), an electrically erasable programmable read-only memory (electrically erasable programmable read only memory, EEPROM), a register (register), a hard disk, a removable hard disk, a CD-ROM, or any other form of storage medium known to a person skilled in the art.

The processor 1202 may be, for example, a central processing unit (central processing unit, CPU), a general-purpose processor, a digital signal processor (digital signal processor, DSP), an application-specific integrated circuit (application-specific integrated circuit, ASIC), or a field programmable gate array (field programmable gate array, FPGA) or another programmable logic device, a transistor logic device, a hardware component, or any combination thereof. The processor may implement or execute various example logical blocks, modules, and circuits described with reference to content disclosed in the embodiments of this application. Alternatively, the processor may be a combination of processors implementing a computing function, for example, a combination of one or more microprocessors, or a combination of a DSP and a microprocessor.

The communications interface 1203 may be, for example, an interface card, or may be an Ethernet (ethernet) interface or an asynchronous transfer mode (asynchronous transfer mode, ATM) interface.

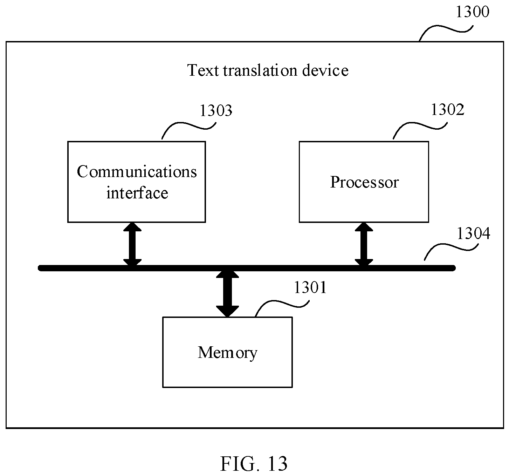

Referring to FIG. 13, an embodiment of this application provides a text translation device 1300. The device includes a storage 1301, a processor 1302, and a communications interface 1303.

a memory, configured to store instructions; and

The processor 1302 is configured to execute the instructions in the storage 1301, to perform the image classification method applied to the embodiment shown in FIG. 7.

The communications interface 1303 is configured to communicate.

The memory 1301, the processor 1302, and the communications interface 1303 are connected to each other by using a bus 1304. The bus 1304 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For convenience of illustration, in FIG. 13, only one thick line is used for illustration, but it does not mean that there is only one bus or one type of bus.

In a specific embodiment, during text translation, the processor 1302 is configured to: obtain to-be-translated text; and input the to-be-translated text to a pre-trained neural network model, to obtain a text translation result corresponding to the to-be-translated text. For a detailed processing process of the processor 1302, refer to the detailed descriptions of S702 and S703 in the embodiment shown in FIG. 7. Details are not described herein again.

The memory 1301 may be a random access memory (random-access memory, RAM), a flash (flash) memory, a read-only memory (read only memory, ROM), an erasable programmable read-only memory (erasable programmable read only memory, EPROM), an electrically erasable programmable read-only memory (electrically erasable programmable read only memory, EEPROM), a register (register), a hard disk, a removable hard disk, a CD-ROM, or any other form of storage medium known to a person skilled in the art.

The processor 1302 may be, for example, a central processing unit (central processing unit, CPU), a general-purpose processor, a digital signal processor (digital signal processor, DSP), an application-specific integrated circuit (application-specific integrated circuit, ASIC), or a field programmable gate array (field programmable gate array, FPGA) or another programmable logic device, a transistor logic device, a hardware component, or any combination thereof. The processor may implement or execute various example logical blocks, modules, and circuits described with reference to content disclosed in the embodiments of this application. Alternatively, the processor may be a combination of processors implementing a computing function, for example, a combination of one or more microprocessors, or a combination of a DSP and a microprocessor.

The communications interface 1303 may be, for example, an interface card, or may be an Ethernet (ethernet) interface or an asynchronous transfer mode (asynchronous transfer mode, ATM) interface.

An embodiment of this application further provides a computer-readable storage medium, including instructions. When the instructions are run on a computer, the computer is enabled to perform any implementation of the neural network model training method in the foregoing embodiment, the image classification method in the foregoing embodiment, or the text translation method in the foregoing embodiment.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, terms "include", "contain", and any other variants thereof are intended to cover the non-exclusive inclusion, so that a process, method, system, product, or device that includes a series of units is not limited to those units, but may include other units not expressly listed or inherent to such a process, method, system, product, or device.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the apparatus embodiment described above is merely an example. For example, division into units is merely logical function division and may be another division manner in actual implementation. For example, a plurality of units or components may be combined or integrated into another system, or some features may be ignored or not performed. In addition, displayed or discussed mutual couplings or direct couplings or communication connections may be indirect couplings or communication connections using some interfaces, apparatuses, or units, and may have an electrical form, a mechanical form, or another form.

The units described as separate parts may or may not be physically separate, and parts displayed as units may or may not be physical units, may be located at one position, or may be distributed on a plurality of network units. Some or all of the units may be selected based on an actual requirement to achieve the objectives of the solutions in the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that the person may still make modifications to the technical solutions described in the foregoing embodiments or make equivalent replacements to some technical features thereof, without departing from the spirit and scope of the technical solutions of the embodiments of this application.

**Claims**

1.  A neural network model training method, wherein the method comprises:

    obtaining codewords from a memory, wherein the codeword corresponds to a first weight matrix of a neural network model;
    determining, based on the codeword, that a weight matrix of the neural network model is the first weight matrix, and training the first weight matrix by using training data;
    updating the codeword when a preset stop condition is not met, to obtain an updated codeword;
    storing the updated codeword in the memory;
    determining, by using the updated codeword obtained from the memory, that the weight matrix of the neural network model is a second weight matrix, and training the second weight matrix by using training data; and
    stopping training of the neural network model when the preset stop condition is met.

2.  The method according to claim 1, wherein when the first weight matrix is an initial weight matrix, the method further comprises:
    dividing the initial weight matrix, to determine a codeword corresponding to the initial weight matrix.

3.  The method according to claim 2, wherein the dividing the initial weight matrix, to determine a codeword corresponding to the initial weight matrix comprises:

    dividing the initial weight matrix into k submatrices of a same dimension, wherein k is a positive integer greater than 1;
    performing clustering processing on the k submatrices of a same dimension, to obtain n codewords corresponding to the k submatrices of a same dimension, wherein n is a positive integer greater than 0, and $n <\_ k$; and
    determining the n codewords as the codeword corresponding to the initial weight matrix.

4.  The method according to claim 3, wherein the performing clustering processing on the k submatrices of a same dimension, to obtain n codewords corresponding to the k submatrices of a same dimension comprises:

    reducing each of the k submatrices of a same dimension into a one-dimensional vector, to obtain k one-dimensional vectors;
    grouping the k one-dimensional vectors into n vector groups, wherein each vector group comprises at least one one-dimensional vector; and
    performing average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, wherein i is an integer that ranges from 1 to n.

5.  The method according to claim 1, wherein the method further comprises:
    releasing the weight matrix of the neural network model in the memory when the preset stop condition is not met.

6.  The method according to claim 1, wherein the updating the codeword when a preset stop condition is not met, to obtain an updated codeword comprises:

determining a weight gradient of the first weight matrix of the neural network model when the preset stop condition is not met; and

determining a codeword gradient based on the first weight gradient, and determining the updated codeword based on the codeword gradient.

7. The method according to claim 6, wherein the determining a codeword gradient based on the weight gradient, and determining the updated codeword based on the codeword gradient comprises:

performing weighted summation on weight gradients that are in the weight gradient and that are of submatrices corresponding to index numbers that belong to a $j^{th}$ codeword, to obtain a codeword gradient corresponding to the $j^{th}$ codeword, wherein j is an integer that ranges from 1 to n;

optimizing the codeword gradient corresponding to the $j^{th}$ codeword, to obtain an update amount of the $j^{th}$ codeword; and

updating the $j^{th}$ codeword by using the update amount of the $j^{th}$ codeword, to obtain an updated $j^{th}$ codeword.

8. The method according to claim 1, wherein the method further comprises:
obtaining an index, wherein the index is a correspondence between the codeword and the weight matrix of the neural network model.

9. The method according to any one of claims 1 to 8, wherein the preset stop condition comprises one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, wherein the loss function is used to measure the difference between the result output by the neural network model for the training data and the result label value corresponding to the training data.

10. An image decoding method, wherein the method comprises:

obtaining a to-be-classified image; and

inputting the to-be-classified image to a trained neural network model, to obtain an image classification result output by the neural network model, wherein

a process of training the neural network model comprises:

obtaining a codeword from a memory, wherein the codeword corresponds to a first weight matrix of the neural network model;

determining, based on the codeword, that a weight matrix of the neural network model is the first weight matrix, and training the first weight matrix by using training data, wherein the training data comprises a positive sample image and a negative sample image;

after the neural network model outputs a probability value indicating that the training data is a positive sample image, updating the codeword when a preset stop condition is not met, to obtain an updated codeword;

storing the updated codeword in the memory;

determining, by using the updated codeword obtained from the memory, that the weight matrix of the neural network model is a second weight matrix, and training the second weight matrix by using training data; and

stopping training of the neural network model when the preset stop condition is met.

11. A text translation method, wherein the method comprises:

obtaining to-be-translated text; and

inputting the to-be-translated text to a trained neural network model, to obtain a text translation result output by the neural network model, wherein

a process of training the neural network model comprises:

obtobtaining a codeword from a memory, wherein the codeword corresponds to a first weight matrix of the neural network model;

determining, based on the codeword, that a weight matrix of the neural network model is the first weight matrix, and training the first weight matrix by using training data, wherein the training data is sample text;

after the neural network model outputs a translation result of the sample text, updating the codeword when a preset stop condition is not met, to obtain an updated codeword;

storing the updated codeword in the memory;

determining, by using the updated codeword obtained from the memory, that the weight matrix of the neural network model is a second weight matrix, and training the second weight matrix of the neural network model by using training data; and

stopping training of the neural network model when the preset stop condition is met.

12. A neural network model training apparatus, wherein the apparatus comprises:

a first obtaining unit, configured to obtain a codeword from a memory, wherein the codeword corresponds to a first weight matrix of a neural network model;

a first training unit, configured to: determine, based on the codeword, that a weight matrix of the neural network model is the first weight matrix, and train the first weight matrix by using training data;

an updating unit, configured to update the codeword when a preset stop condition is not met, to obtain an updated codeword;

a storage unit, configured to store the updated codeword in the memory;

a second training unit, configured to: determine, by using the updated codeword obtained from the memory, that the weight matrix of the neural network model is a second weight matrix, and train the second weight matrix by using training data; and

a stop unit, configured to stop training of the neural network model when the preset stop condition is met.

13. The apparatus according to claim 11, wherein when the first weight matrix is an initial weight matrix, the apparatus further comprises:

a division unit, configured to divide the initial weight matrix, to determine a codeword corresponding to the initial weight matrix

14. The apparatus according to claim 13, wherein the division unit comprises:

a first division subunit, configured to divide the initial weight matrix into k submatrices of a same dimension, wherein k is a positive integer greater than 1;

a clustering subunit, configured to perform clustering processing on the k submatrices of a same dimension, to obtain n codewords corresponding to the k submatrices of a same dimension, wherein n is a positive integer greater than 0, and $n \le k$; and

a first determining subunit, configured to determine the n codewords as the codeword corresponding to the initial weight matrix.

15. The apparatus according to claim 14, wherein the clustering subunit comprises:

a dimension reduction subunit, configured to reduce each of the k submatrixes of a same dimension into a one-dimensional vector, to obtain k one-dimensional vectors;

a second grouping subunit, configured to group the k one-dimensional vectors into n vector groups, wherein each vector group comprises at least one one-dimensional vector; and

a calculation subunit, configured to perform average calculation on element values at corresponding locations in all one-dimensional vectors that belong to an $i^{th}$ vector group in the k one-dimensional vectors, to obtain a codeword corresponding to all the one-dimensional vectors in the $i^{th}$ vector group, wherein i is an integer that ranges from 1 to n.

16. The apparatus according to claim 12, wherein the apparatus further comprises:

a releasing unit, configured to release the weight matrix of the neural network model in the memory when the preset stop condition is not met.

17. The device according to claim 12, wherein the updating unit comprises:

a second determining subunit, configured to determine a weight gradient of the first weight matrix of the neural network model when the preset stop condition is not met; and

a third determining subunit, configured to: determine a codeword gradient based on the first weight gradient, and determine the updated codeword based on the codeword gradient.

18. The apparatus according to claim 17, wherein the third determining unit comprises:

a first obtaining subunit, configured to perform weighted summation on weight gradients that are in the weight gradient and that are of submatrices corresponding to index numbers that belong to a $j^{th}$ codeword, to obtain a codeword gradient corresponding to the $j^{th}$ codeword, wherein j is an integer that ranges from 1 to n;

a second obtaining subunit, configured to optimize the codeword gradient corresponding to the $j^{th}$ codeword, to obtain an update amount of the $j^{th}$ codeword; and

a third obtaining subunit, configured to update the $j^{th}$ codeword by using the update amount of the $j^{th}$ codeword, to obtain an updated $j^{th}$ codeword.

19. The apparatus according to claim 12, wherein the apparatus further comprises:
a second obtaining unit, configured to obtain an index, wherein the index is a correspondence between the codeword and the weight matrix of the neural network model.

20. The apparatus according to any one of claims 12 to 19, wherein the preset stop condition comprises one or more of the following conditions:

a difference between a result label value corresponding to the training data and a result output by the neural network model for the training data is less than a preset difference;

a change rate of the difference between the result label value corresponding to the training data and the result output by the neural network model for the training data is less than a preset change threshold;

a quantity of update times of a model parameter in the neural network model reaches a preset quantity of update times; and

an output value of a loss function used by the neural network model reaches a preset threshold, wherein the loss function is used to measure the difference between the result output by the neural network model for the training data and the result label value corresponding to the training data.

21. An image processing apparatus, wherein the apparatus comprises:

an image obtaining unit, configured to obtain a to-be-classified image;

an image classification unit, configured to input the to-be-classified image to a trained neural network model, to obtain an image classification result output by the neural network model; and

a neural network model training unit, configured to train the neural network model, wherein

the neural network model training unit comprises:

a first obtaining unit, configured to obtain a codeword from a memory, wherein the codeword corresponds to a first weight matrix of the neural network model;

a first training unit, configured to determine, based on the codeword, that a weight matrix of the neural network model is the first weight matrix, and train the first weight matrix by using training data, wherein the training data comprises a positive sample image and a negative sample image;

an updating unit, configured to: after the neural network model outputs a probability value indicating that the training data is a positive sample image, update the codeword when a preset stop condition is not met, to obtain an updated codeword;

a storage unit, configured to store the updated codeword in the memory;

a second training unit, configured to: determine, by using the updated codeword obtained from the memory, that the weight matrix of the neural network model is a second weight matrix, and train the second weight matrix by using training data; and

a stop unit, configured to stop training of the neural network model when the preset stop condition is met.

22. A text translation apparatus, wherein the apparatus comprises:

a text obtaining unit, configured to obtain to-be-translated text;

a text translation unit, configured to input the to-be-translated text to a trained neural network model, to obtain a text translation result output by the neural network model; and
a neural network model training unit, configured to train the neural network model, wherein the neural network model training unit comprises:

a first obtaining unit, configured to obtain a codeword from a memory, wherein the codeword corresponds to a first weight matrix of the neural network model;
a first training unit, configured to: determine, based on the codeword, that a weight matrix of the neural network model is the first weight matrix, and train the first weight matrix by using training data, wherein the training data is sample text;
an updating unit, configured to: after the neural network model outputs a translation result of the sample text, update the codeword when a preset stop condition is not met, to obtain an updated codeword;
a storage unit, configured to store the updated codeword in the memory;
a second training unit, configured to: determine, by using the updated codeword obtained from the memory, that the weight matrix of the neural network model is a second weight matrix, and train the second weight matrix of the neural network model by using training data; and
a stop unit, configured to stop training of the neural network model when the preset stop condition is met.

23. A neural network model training device, wherein the device comprises a storage and a processor;

The memory is configured to store instructions.
the processor is configured to execute the instructions in the storage, to perform the neural network model training method according to any one of claims 1 to 9.

24. An image classification device, wherein the device comprises a storage and a processor;

The memory is configured to store instructions.
the processor is configured to execute the instructions in the storage, to perform the image classification method according to claim 10.

25. A text translation device, wherein the device comprises a storage and a processor;

The memory is configured to store instructions.
the processor is configured to execute the instructions in the storage, to perform the text translation method according to claim 11.

26. A computer-readable storage medium, comprising instructions, wherein when the instructions are run on a computer, the computer is enabled to perform the neural network model training method according to any one of claims 1 to 9, or implement the image classification method according to claim 10 or the text translation method according to claim 11.

Intelligent information chain

Intelligent products and industry applications

| Translation/Text analysis/... | Voice/Vision/Image/... |

| Data | Data processing: | Data training/Machine learning/Deep learning | Searching/ Inference/ Decision- making | ... |

Infrastructure | Sensor | Intelligent chip | Basic platform | ...

IT value chain

FIG. 1

Memory 201

Processor 202

203

Matrix calculation unit

Vector calculation unit

Buffer

FIG. 2

301

Obtain a codeword from a memory, where the codeword corresponds to a first
weight matrix of a neural network model

302

Determine, based on the codeword, that a weight matrix of the
neural network model is the first weight matrix, and train the first weight matrix
by using training data

303

Update the codeword when a preset stop condition is not met, to obtain an updated
codeword

304

Store the updated codeword in the memory

305

Determine, by using the updated codeword obtained from the memory,
that the weight matrix of the neural network model is a second weight matrix,
and train the second weight matrix by using training data

306

Stop training of the neural network model when the preset stop condition is met

FIG. 3

Process of determining a weight matrix

**12**

Dictionary that
includes a codeword

Index

Weight matrix

FIG. 4

FIG. 5

Obtain a to-be-classified image ⌐ 601

Input the to-be-classified image to a trained neural network model, to obtain an image classification result output by the neural network model ⌐ 602

FIG. 6

Obtain a to-be-translated text ⌐ 701

Input the to-be-translated text to a trained neural network model, to obtain a text translation result output by the neural network model ⌐ 702

FIG. 7

800

**Neural network model training apparatus**

First obtaining unit — 801

First training unit — 802

Updating unit — 803

Storage unit — 804

Second training unit — 805

Stop unit — 806

FIG. 8

900

Image classification apparatus

Image obtaining unit — 901

Image classification unit — 902

Neural network model training unit — 903

FIG. 9

1000

Text translation apparatus

Text obtaining unit — 1001

Text translation unit — 1002

Neural network model training unit — 1003

FIG. 10

1100

Neural network model training device

1103

Communications interface

1102

Processor

1104

1101

Memory

FIG. 11

1200

Image classification device

1203

Communications interface

1202

Processor

1204

1201

Memory

FIG. 12

1300

Text translation device

1303

Communications interface

1302

Processor

1304

1301

Memory

FIG. 13

## INTERNATIONAL SEARCH REPORT

| International application No. |
| --- |
| **PCT/CN2021/086589** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT, CNABS, SIPOABS, DWPI, CNKI: 神经网络模型, 权重, 压缩, 码字, 训练, 矩阵, 聚类, 梯度, 阈值; neural network model, weight, compression, compressed, code, training, matrix, cluster, gradient, threshold

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109063666 A (UNIVERSITY OF ELECTRONIC SCIENCE AND TECHNOLOGY OF CHINA) 21 December 2018 (2018-12-21) description, paragraphs 59-90 | 1-26 |
| Y | CN 107886164 A (NEUSOFT CORPORATION et al.) 06 April 2018 (2018-04-06) description, paragraphs 76-185 | 1-26 |
| A | CN 107977704 A (INSTITUTE OF COMPUTING TECHNOLOGY, CHINESE ACADEMY OF SCIENCES) 01 May 2018 (2018-05-01) entire document | 1-26 |
| A | CN 107832835 A (GUIYANG HISENSE TRANSTECH CO., LTD.) 23 March 2018 (2018-03-23) entire document | 1-26 |
| A | CN 108629772 A (SHANGHAI SHANGTANG INTELLIGENT TECHNOLOGY CO., LTD.) 09 October 2018 (2018-10-09) entire document | 1-26 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 June 2021** | **09 August 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/086589**

| Patent document cited in search report | | | Publication date (day/month/year) | Patent family member(s) | | | Publication date (day/month/year) |
|---|---|---|---|---|---|---|---|
| CN | 109063666 | A | 21 December 2018 | None | | | |
| CN | 107886164 | A | 06 April 2018 | None | | | |
| CN | 107977704 | A | 01 May 2018 | JP | 2021503644 | A | 12 February 2021 |
| | | | | CN | 107977704 | B | 31 July 2020 |
| | | | | WO | 2019091020 | A1 | 16 May 2019 |
| | | | | US | 2021182666 | A1 | 17 June 2021 |
| CN | 107832835 | A | 23 March 2018 | None | | | |
| CN | 108629772 | A | 09 October 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010558711